# EUROPEAN PATENT APPLICATION

(11) **EP 4 734 429 A1**
(43) Date of publication of application: **29.04.2026**
(21) Application number: 24852388.8
(22) Date of filing: 09.08.2024
(51) Int. Cl.: H04L 5/00, H04B 7/0408

(54) **METHOD AND DEVICE FOR SUPPORTING PLURALITY OF TRP OPERATIONS BASED ON ONE IMPROVED PDCCH BY USING INTEGRATED TCI FRAMEWORK IN NEXT GENERATION MOBILE COMMUNICATION SYSTEM**

(30) Priority: 10.08.2023 KR 20230104949
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR); JANG, Youngrok, Suwon-si, Gyeonggi-do 16677 (KR); LIM, Seongmok, Suwon-si, Gyeonggi-do 16677 (KR)
(74) Representative: Gulde & Partner
(86) International application number: PCT/KR2024/011847
(87) International publication number: WO 2025/034035

(57) **Abstract**

The present disclosure relates to a 5G or 6G communication system for supporting higher data transmission rates. According to one embodiment, a method performed by a terminal in a wireless communication system may comprise the steps of: receiving, from a base station, a radio resource control (RRC) message including information related to at least one transmission configuration indicator (TCI) state; receiving, from the base station, a media access control (MAC) control element (CE) for activating the at least one TCI state, the MAC CE including first information corresponding to a first TCI state related to at least one code point, second information corresponding to a second TCT state related to the one code point, and TCI state ID information according to the first information and the second information; receiving, from the base station, downlink control information (DCI) including a TCI field indicating the one code point; and confirming, on the basis of the RRC message and the MAC CE, TCI state information related to a code point corresponding to the TCI field.

## Description

### [Technical Field]

The disclosure relates to the operation of a user equipment (UE) and a base station in a mobile communication system. More particularly, the disclosure relates to a method and device that allows a UE to support a plurality of transmission reception point (TRP) operations based on one physical downlink control channel (PDCCH) using a unified transmission configuration indication (TCI) framework in a wireless communication system.

### [Background Art]

5-th generation (5G) mobile communication technologies define broad frequency bands such that high transmission rates and new services are possible, and may be implemented not only in "Sub 6 GHz" bands, such as 3.5 GHz, but also in "Above 6 GHz" bands referred to as mmWave including 28 GHz and 39 GHz. In addition, it has been considered to implement 6-th generation (6G) mobile communication technologies referred to as Beyond 5G systems in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods, such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies, such as vehicle-to-everything (V2X) for aiding driving determination by autonomous vehicles based on information on locations and states of vehicles transmitted by the vehicles and for enhancing user convenience, new radio unlicensed (NR-U) aimed at system operations conforming to various regulation-related requirements in unlicensed bands, NR user equipment (UE) power saving, non-terrestrial network (NTN) that is UE-satellite direct communication for providing coverage in an area in which communication with terrestrial networks is unavailable, and positioning.

In addition, there has been ongoing standardization in air interface architecture/protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures 2-step RACH for NR). There also has been ongoing standardization in system architecture/service field regarding a 5G baseline architecture (e.g., service based architecture or service based interface) for combining Network Functions Virtualization (NFV) and Software-Defined Networking (SDN) technologies, and Mobile Edge Computing (MEC) for receiving services based on user equipment (UE) locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR), and the like, 5G performance improvement and complexity reduction by utilizing artificial intelligence (AI) and machine learning (ML), AI service support, metaverse service support, and drone communication.

Also, such development of 5G mobile communication systems will serve as a basis for developing not only new waveforms for providing coverage in terahertz bands of 6G mobile communication technologies, multi-antenna transmission technologies, such as full dimensional MIMO (FD-MIMO), array antennas, and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

Currently, beam (transmission configuration indication (TCI) state) activation/deactivation for a specific bandwidth part (BWP) within a single serving cell is possible. However, with advancement in technology, there is a growing need for a method and device for transmitting and receiving data through a plurality of transmission reception points (TRPs) for a specific BWP within a serving cell or between serving cells to support a plurality of TRP operations based on a single PDCCH (downlink control information (DCI)).

### [Disclosure of Invention]

### [Technical Problem]

The disclosure provides a method that allows a user equipment (UE) to perform data transmission and reception through a plurality of transmission reception points (TRPs) based on unified beam information (unified transmission configuration indication (TCI)).

More specifically, in relation to an operation of a UE that configures and activates unified beam information (unified transmission configuration indication (TCI) state) used for physical downlink control channel (PDCCH)/physical downlink shared channel (PDSCH)/physical uplink control channel (PUCCH)/physical uplink shared channel (PUSCH) in a next-generation mobile communication system using a beam, only beam (TCI state) activation/deactivation for a specific bandwidth part (BWP) within a single service cell is currently possible. The disclosure provides a method and device for supporting a transmission and reception technique through a plurality of TRPs for a specific BWP within a serving cell or between serving cells to support a plurality of TRP operations based on a single PDCCH (downlink control information (DCI)).

Technical subjects to be achieved by embodiments of the disclosure are not limited to the above-described technical subjects and still other technical subjects not mentioned may be clearly understood by one of ordinary skill in the art to which the disclosure pertains from the following description.

### [Solution to Problem]

The disclosure for addressing the above-described issues proposes a method performed by a user equipment (UE) in a wireless communication system. More specifically, the method includes receiving, from a base station, a radio resource control (RRC) message that includes information related to at least one transmission configuration indictor (TCI) state; receiving, from the base station, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information; receiving, from the base station, downlink control information (DCI) that includes a TCI field indicating the single code point; and identifying TCI state information related to a code point corresponding to the TCI field based on the RRC message and the MAC CE.

The disclosure for addressing the above-described issues proposes a method performed by a base station in a wireless communication system. More specifically, the method includes transmitting, to a UE, a radio resource control (RRC) message that includes information related to at least one transmission configuration indictor (TCI) state; transmitting, to the UE, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information; and transmitting, to the UE, downlink control information (DCI) that includes a TCI field indicating the single code point, wherein state information related to a code point corresponding to the TCI field included in the DCI is related to the RRC message and the MAC CE.

The disclosure for addressing the above-described issues proposes a UE in a wireless communication system. More specifically, the UE includes a transceiver configured to transmit and receive signals; and a controller combined with the transceiver, wherein the controller is configured to receive, from a base station, a radio resource control (RRC) message that includes information related to at least one transmission configuration indictor (TCI) state, to receive, from the base station, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information, to receive, from the base station, downlink control information (DCI) that includes a TCI field indicating the single code point, and to identify TCI state information related to a code point corresponding to the TCI field based on the RRC message and the MAC CE.

The disclosure for addressing the above-described issues proposes a base station in a wireless communication system. More specifically, the base station includes a transceiver configured to transmit and receive signals; and a controller combined with the transceiver, wherein the controller is configured to transmit, to a user equipment (UE), a radio resource control (RRC) message that includes information related to at least one transmission configuration indictor (TCI) state, to transmit, to the UE, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information, and to transmit, to the UE, downlink control information (DCI) that includes a TCI field indicating the single code point, and state information related to a code point corresponding to the TCI field included in the DCI is related to the RRC message and the MAC CE.

### [Advantageous Effects of Invention]

According to an embodiment of the disclosure, it is possible to efficiently transmit and receive signals in a wireless communication system.

More specifically, according to an embodiment of the disclosure, proposed is an enhanced transmission and reception technique through a plurality of transmission reception points (TRPs) using a unified transmission configuration indication (unified TCI) framework. For example, by supporting transmission and reception through one downlink control information (DCI), it is possible to perform the transmission and reception technique through a plurality of TRPs for a specific bandwidth part (BWP).

Effects that may be acquired from the disclosure are not limited to the effects mentioned in various embodiments, and still other effects not mentioned may be clearly understood by one of ordinary skill in the art to which the disclosure pertains from the following description.

### [Brief Description of Drawings]

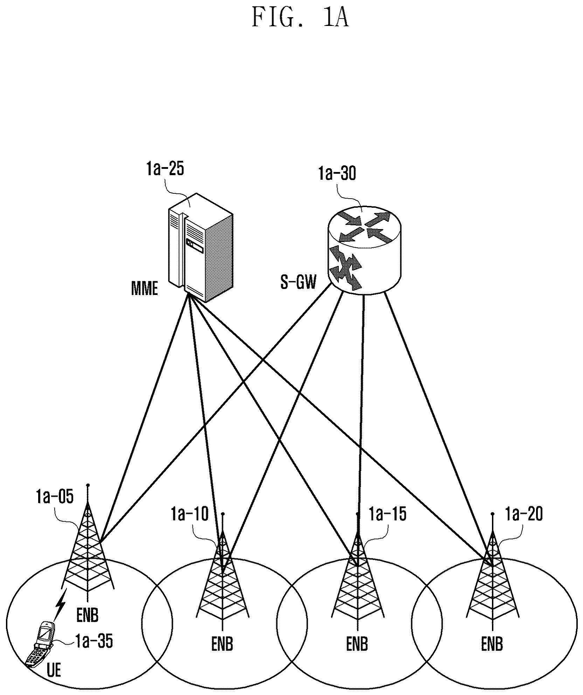

FIG. 1a illustrates a structure of a long term evolution (LTE) system according to an embodiment of the disclosure.

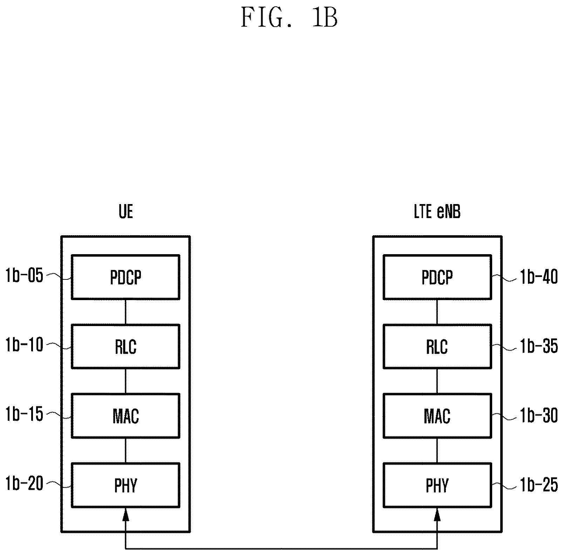

FIG. 1b illustrates a wireless protocol structure in a long term evolution (LTE) system according to an embodiment of the disclosure.

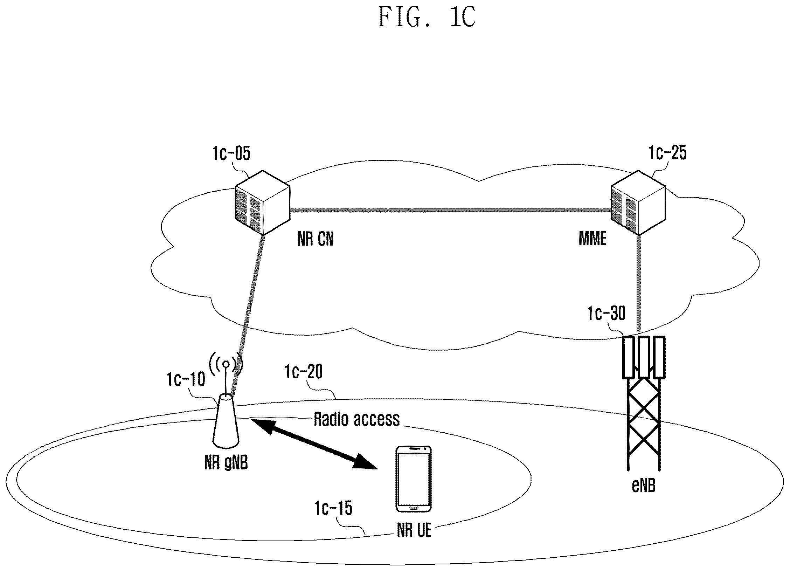

FIG. 1c illustrates a structure of a next-generation mobile communication system according to an embodiment of the disclosure.

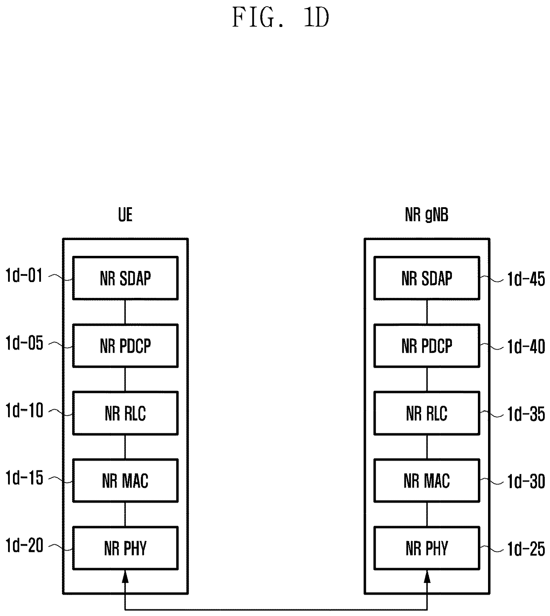

FIG. 1d illustrates a wireless protocol structure of a next-generation mobile communication system according to an embodiment of the disclosure.

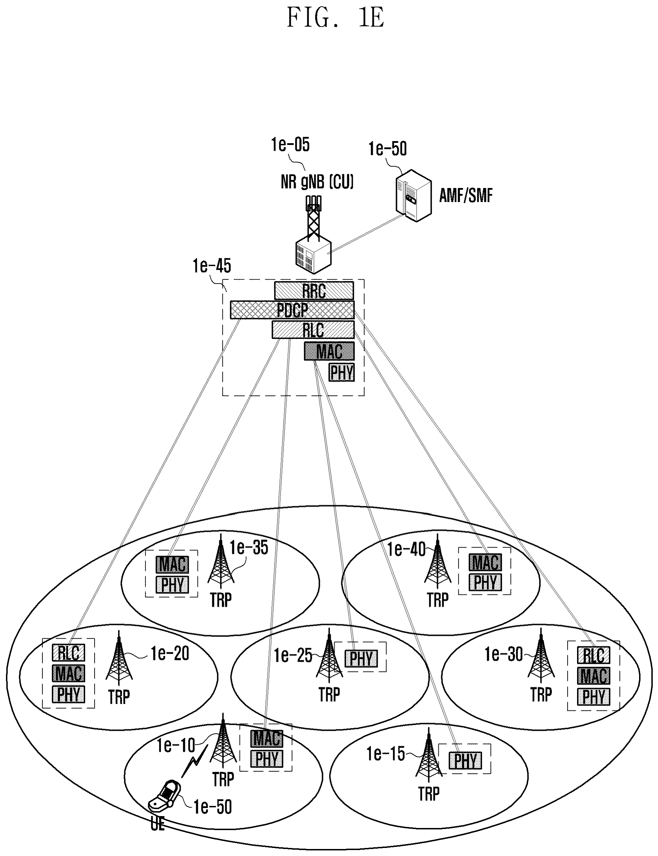

FIG. 1e illustrates a structure of a next-generation mobile communication system according to still another embodiment of the disclosure.

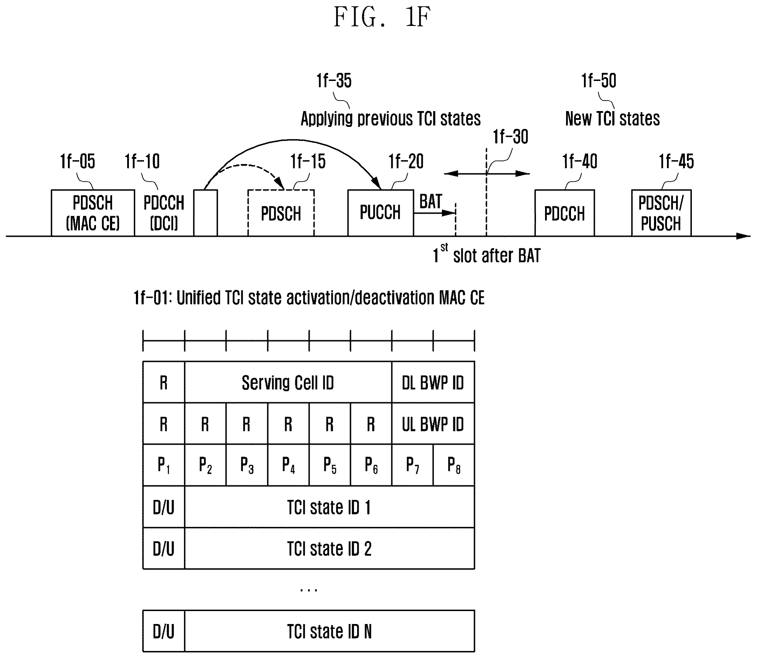

FIG. 1f illustrates a method to which a unified transmission configuration indication (TCI) state is applied according to an embodiment of the disclosure.

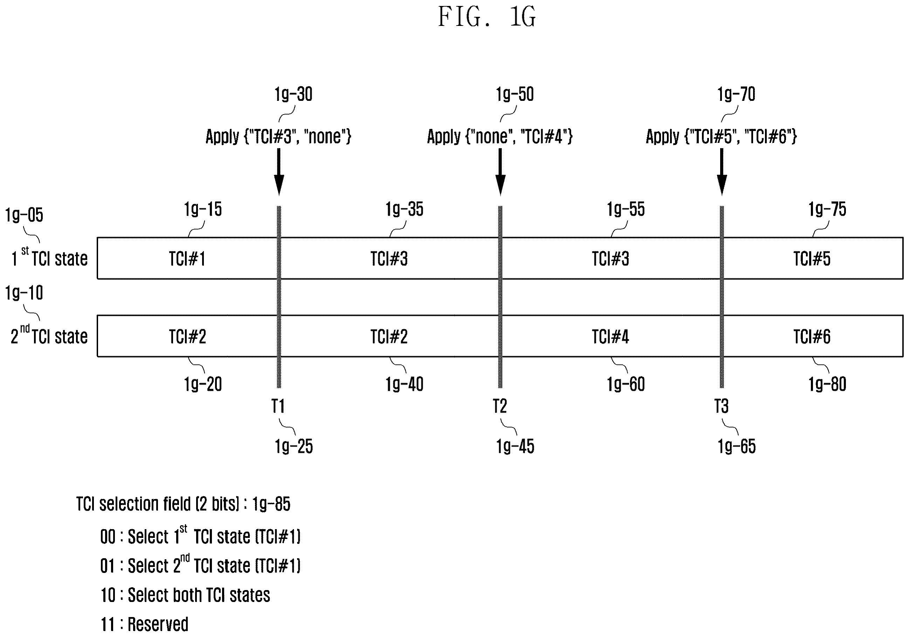

FIG. 1g illustrates a method in which a unified TCI state is applied to a plurality of TRPs according to an embodiment of the disclosure.

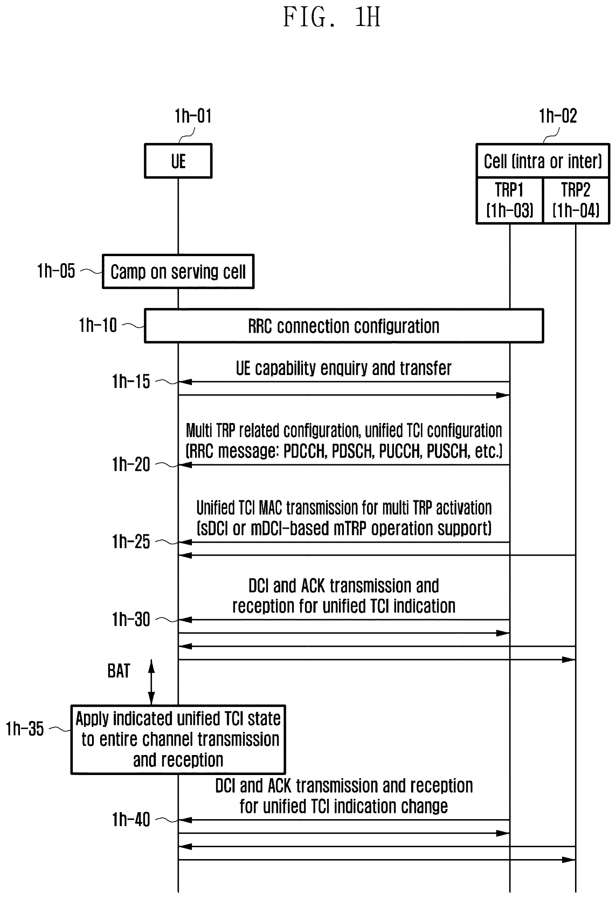

FIG. 1h illustrates a method of transmitting and receiving data by applying a unified transmission configuration indication (TCI) framework according to an embodiment of the disclosure, that is, illustrates the entire procedure to which an enhanced technique is applied.

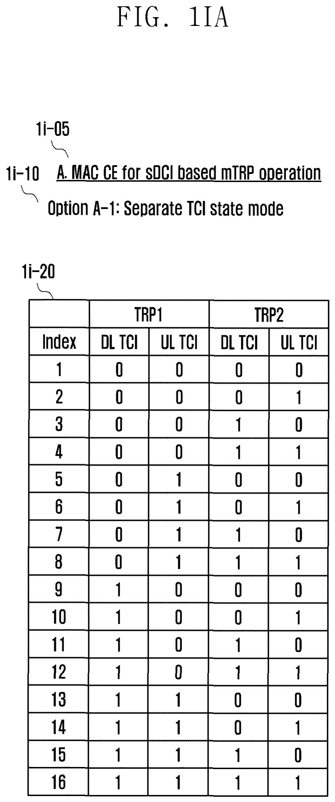

FIG. 1ia to FIG. 1if illustrate a structure of a medium access control (MAC) control element (CE) according to an embodiment of the disclosure.

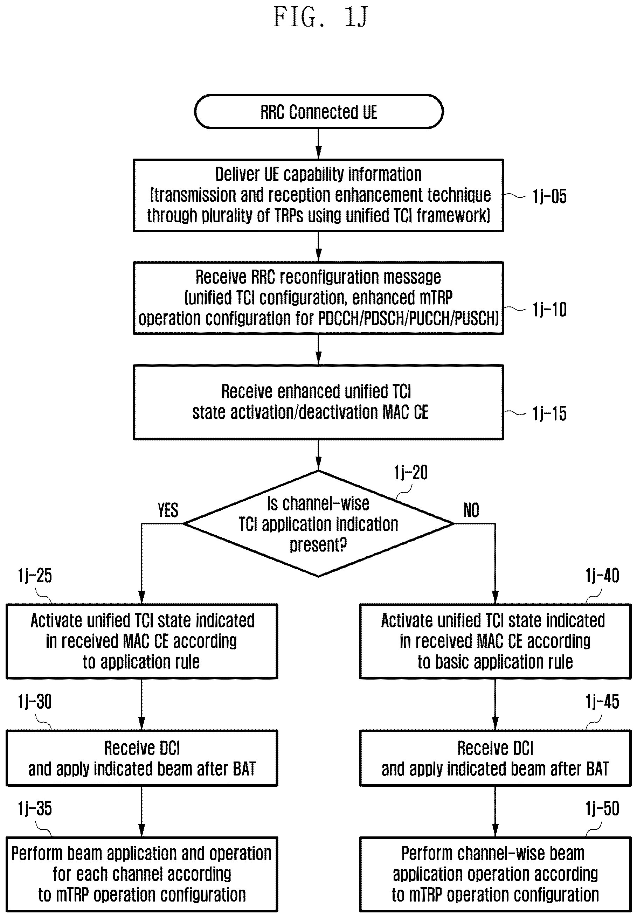

FIG. 1j illustrates an operation of a user equipment (UE) according to an embodiment of the disclosure.

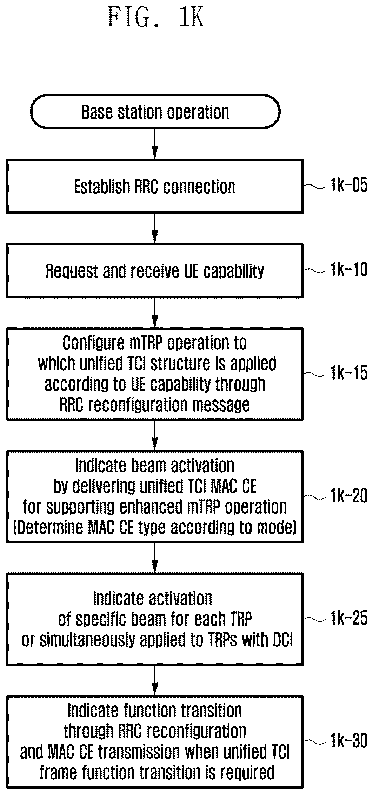

FIG. 1k illustrates an operation of a base station according to an embodiment of the disclosure.
FIG. 1I is a block diagram illustrating an internal constitution of a UE according to an embodiment of the disclosure.

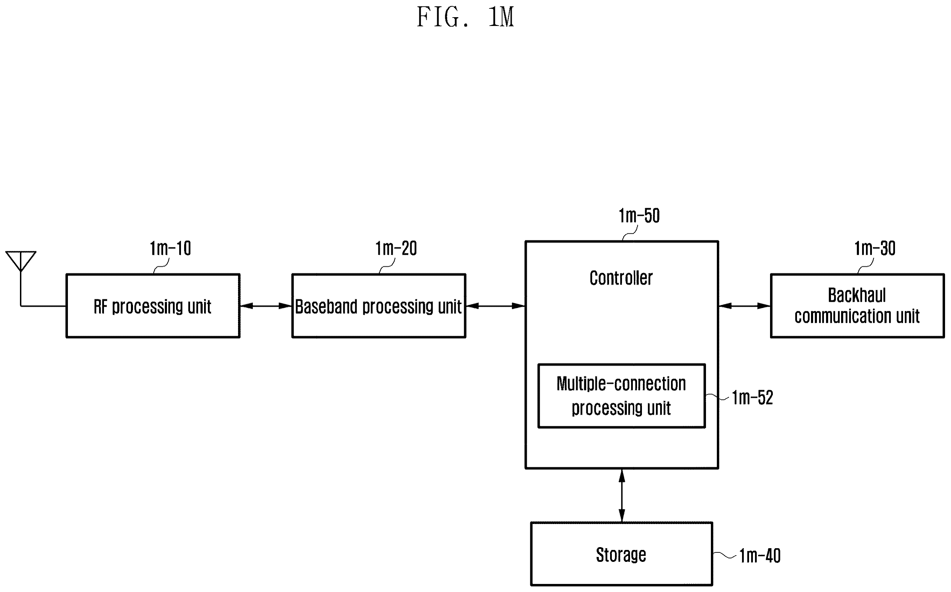

FIG. 1m is a block diagram illustrating a constitution of a new radio (NR) base station according to an embodiment of the disclosure.

### [Mode for the Invention]

Hereinafter, the operating principle of the present invention is described in detail with reference to the accompanying drawings. When it is determined that a detailed description of related known functions or configurations may unnecessarily obscure the gist of the disclosure in describing the present invention in the following, the detailed description will be omitted. The terms that are described below are terms defined in consideration of the functions in the present invention, and may be different depending on users, intentions of operators, or customs. Therefore, the definitions of the terms should be made based on the contents throughout the specification.

Terms used herein to identify access nodes, terms indicating network entities, terms indicating messages, terms indicating interfaces between network entities, and terms indicating various identification information are examples for convenience of explanation. Therefore, the present invention is not limited to the terms described below and other terms indicating objects having the equivalent technical meaning may be used.

Similarly, in the drawings, some elements may be exaggerated, omitted, or schematically illustrated. Also, the size of each element does not completely reflect the actual size. In the drawings, identical or corresponding elements are provided with identical reference numerals.

The advantages and features of the disclosure and methods to achieve them will be apparent with reference to embodiments described below in detail in conjunction with the accompanying drawings. However, the disclosure is not limited to the embodiments set forth below, but may be implemented in various different forms. The following embodiments are provided only to completely disclose the disclosure and to fully inform those skilled in the art of the scope of the disclosure. The disclosure is defined by the scope of the claims. Throughout the specification, the same reference numerals refer to same components.

Here, it will be understood that each block of flowchart illustrations and combinations of blocks in the flowchart illustrations may be implemented by computer program instructions. These computer program instructions may be provided to a processor of a general-purpose computer, a special purpose computer, or other programmable data processing equipment, such that the instructions, executed via the processor of the computer or other programmable data processing equipment, generate a method for implementing the functions specified in the flowchart block(s). These computer program instructions may also be stored in a computer-usable or computer-readable memory that may direct a computer or other programmable data processing equipment to function in a particular manner, such that the instructions stored in the computer usable or computer-readable memory produce an article of manufacture including instruction methods that implement the function specified in the flowchart block(s). The computer program instructions may also be loaded onto a computer or other programmable data processing equipment to cause a series of operational steps to be performed on the computer or other programmable equipment to produce a computer implemented process such that the instructions executed on the computer or other programmable equipment provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved.

Here, the term "unit" used in various embodiments of the disclosure refers to a software component or a hardware component, such as a field programmable gate array (FPGA) or an application specific integrated circuit (ASIC), which performs a predetermined function. However, the term "unit" does not always have a meaning limited to software or hardware. "Unit" may be configured either to be stored in an addressable storage medium or to execute one or more processors. Therefore, "unit" includes, for example, components such as software components, object-oriented software components, class components, and task components, processes, functions, properties, procedures, sub-routines, segments of a program code, drivers, firmware, micro-codes, circuits, data, database, data structures, tables, arrays, and parameters. The components and functions provided by "units" may be combined into a smaller number of components and "units," or further divided into additional components and "units." In addition, the components and "units" may be implemented to reproduce one or more CPUs within a device or a security multimedia card.

In the following description, a base station is an entity that allocates resources to a terminal, and may be at least one of an eNode B (eNB), a Node B, a base station (BS), a radio access network (RAN), an access network (An), a RAN node, an NR NB, a gNB, a wireless access unit, a BS controller, and a node on a network.

A terminal may include a user equipment (UE), a mobile station (MS), a cellular phone, a smartphone, a computer, or a multimedia system capable of performing communication functions. In various embodiments of the disclosure, description is made based on an example in which the terminal is the UE. Also, although various embodiments of the disclosure are described in the following using a long term evolution (LTE), LTE-A, or new ratio (NR)-based system by way of example, various embodiments of the disclosure may also be applied to other communication systems having similar technical backgrounds or channel types. Also, based on judgement by those skilled in the art, various embodiments of the disclosure may be applied to other communication systems through some modifications without significantly departing from the scope of the disclosure.

Terms used herein to identify access nodes, terms indicating network entities, terms indicating messages, terms indicating interfaces between network entities, and terms indicating various identification information are examples for convenience of explanation. Therefore, the present invention is not limited to the terms described below and other terms indicating objects having the equivalent technical meaning may be used.

Hereinafter, for convenience of explanation, the present invention uses terms and names defined in 3rd Generation Partnership Project long term evolution (3GPP LTE) standards. However, the present invention is not limited to the terms and the names, and may be equally applied to systems that conform to other standards.

FIG. 1a illustrates a structure of a long term evolution (LTE) system according to an embodiment of the disclosure.

With reference to FIG. 1a, a wireless access network of the LTE system includes next-generation based stations (evolved node B, hereinafter, eNB, node B, or base station) 1a-05, 1a-10, 1a-15, and 1a-20, a mobility management entity (MME) 1a-25, and a serving-gateway (S-GW) 1a-30. A user equipment (hereinafter, UE or terminal) 1a-35 connects to an external network through the eNBs 1a-05 to 1a-20 and the S-GW 1a-30.

In FIG. 1a, each of the eNBs 1a-05 to 1a-20 corresponds to an existing node B of universal mobile communications system (UMTS). The eNB is connected to the UE 1a-35 through a wireless channel and performs a more complex role than the existing node B. In the LTE system, all user traffic including real-time services, such as voice over Internet protocol (VoIP) via Internet protocol, is serviced through a shared channel. Therefore, there is a need for a device that collects status information, such as buffer status, available transmission power status, and channel status of UEs, and performs scheduling, which is handled by the eNBs 1a-05 to 1a-20. One eNB typically controls multiple cells. For example, to achieve a transmission speed of 100 Mbps, the LTE system uses, for example, an orthogonal frequency division multiplexing (OFDM) scheme as wireless access technology in the bandwidth of 20 MHz. Also, the LTE system applies an adaptative modulation & coding (AMC) scheme that determines a modulation scheme and a channel coding rate according to the channel status of the UE. The S-GW 1a-30 refers to a device that provides a data bearer, and generates or removes the data bearer under control of the MME 1a-25. The MME refers to a device that is responsible for various control functions as well as a mobility management function for the UE, and is connected to multiple base stations.

FIG. 1b illustrates a wireless protocol structure in a long term evolution (LTE) system according to an embodiment of the disclosure.

With reference to FIG. 1b, the wireless protocol of the LTE system includes packet data convergence protocols (PDCPs)1b-05 and 1b-40, radio link controls (RLCs) 1b-10 and 1b-35, and medium access controls (MACs) 1b-15 and 1b-30 in a UE and an eNB, respectively.

The PDCP 1b-05, 1b-40 is responsible for operation, such as IP header compression/decompression. Main functions of the PDCP are summarized as follows.
- A header compression and decompression function (ROHC only)
- A user data transmission function (transfer of user data)
- A sequential delivery function (in-sequence delivery of upper layer PDUs at PDCP re-establishment procedure for RLC AM)
- A reordering function (for split bearers in DC (only support for RLC AM): PDCP PDU routing for transmission and PDCP PDU reordering for reception)
- A duplicate detection function (duplicate detection of lower layer SDUs at PDCP re-establishment procedure for RLC AM)
- A retransmission function (retransmission of PDCP SDUs at handover and, for split bearers in DC, of PDCP PDUs at PDCP data-recovery procedure, for RLC AM)
- A ciphering and deciphering function
- A timer-based SDU discard function (Timer-based SDU discard in uplink.)

The radio link control (RLC) 1b-10, 1b-35 reconstructs a PDCP packet data unit (PDU) to an appropriate size, and performs an automatic repeat request (ARQ) operation. Main functions of the RLC are summarized as follows.
- A data transmission function (transfer of upper layer PDUs)
- An ARQ function (error correction through ARQ (only for AM data transfer))
- A concatenation, segmentation, and reassembly function (concatenation, segmentation and reassembly of RLC SDUs (only for UM and AM data transfer))
- A re-segmentation function (re-segmentation of RLC data PDUs (only for AM data transfer))
- A reordering function (reordering of RLC data PDUs (only for UM and AM data transfer)
- A duplicate detection function (duplicate detection (only for UM and AM data transfer))
- An error detection function (protocol error detection (only for AM data transfer))
- An RLC SDU discard function (RLC SDU discard (only for UM and AM data transfer))
- An RLC re-establishment function (RLC re-establishment)

The MAC 1b-15, 1b-30 is connected to a plurality of RLC layer devices configured in a single UE, and performs an operation of multiplexing RLC PDUs to a MAC PDU and demultiplexing the RLC PDUs from the MAC PDU. Main functions of the MAC are summarized as follows.
- A mapping function (mapping between logical channels and transport channels)
- A multiplexing and demultiplexing function (multiplexing/demultiplexing of MAC SDUs belonging to one or different logical channels into/from transport blocks (TB) delivered to/from the physical layer on transport channels)
- A scheduling information reporting function
- A HARQ function (error correction through HARQ)
- A priority handling function between logical channels (priority handling between logical channels of one UE)
- A priority handling function between UEs (priority handling between UEs by means of dynamic scheduling)
- A multimedia broadcast and multicast service (MBMS) service identification function
- A transport format selection function
- A padding function

A physical layer (PHY) 1b-20, 1b-25 performs the operation of channel-coding and modulating higher layer data, converting the same to an OFDM symbol, and transmitting the OFDM symbol through a wireless channel, or demodulating and channel-decoding the OFDM symbol received through the wireless channel and transmitting the demodulated and channel-coded OFDM symbol to the higher layer. Also, even the physical layer uses hybrid ARQ (HARQ) for additional error correction, and a reception end transmits 1 bit to indicate whether a packet transmitted from a transmission end is received. This is called HARQ ACK/NACK. Downlink HARQ ACK/NACK information for uplink transmission may be transmitted through the physical channel, a physical hybrid-ARQ indicator channel (PHICH), and uplink HARQ ACK/NACK information for downlink transmission may be transmitted through the physical channel, a physical uplink control channel (PUCCH) or a physical uplink shared channel (PUSCH).

Meanwhile, the PHY layer may include one or a plurality of frequencies/carriers, and technology of simultaneously configuring and using a plurality of frequencies is called carrier aggregation (CA) technology. The CA technology additionally uses a primary carrier and one or a plurality of secondary carriers beyond using only one carrier for communication between a UE and a base station (E-UTRAN NodeB, eNB), which may dramatically increase the transmission capacity by the number of secondary carriers.

Meanwhile, in LTE, a cell within a base station that uses a primary carrier is called a primary cell (PCell), and a secondary carrier is called a secondary cell (SCell).

Although not illustrated in this drawing, radio resource control (RRC) layers are present above the PDPC layers of the UE and the base station, respectively. The RRC layer may exchange connection and measurement related configuration control messages for wireless resource control.

FIG. 1c illustrates a structure of a next-generation mobile communication system according to an embodiment of the disclosure.

With reference to FIG. 1c, as illustrated, a wireless access network of the next-generation mobile communication system includes a next-generation base station (new radio node B, hereinafter, NR NB) 1c-10 and a new radio core network (NR CN) or a next generation core network (NG CN) 1c-05. A UE (new radio user equipment (NR UE) or terminal) 1c-15 may connect to an external next through the NR NB 1c-10 and the NR CN 1c-05.

In FIG. 1c, the NR NB 1c-10 corresponds to an existing evolved node B (eNB) of the LTE system. The NR NB may be connected to the NR UE 1c-15 through a wireless channel, and may provide superior services compared to the existing node B. In the next-generation mobile communication system, all user traffic is serviced through a shared channel. Therefore, there is a need for a device that collects status information, such as buffers status, available transmission power status, and channel status of UEs, and performs scheduling, which is handled by the NR NB 1c-10.

One NR NB may typically control multiple cells. To achieve ultra-high-speed data transmission compared to the existing LTE, beamforming technology may be additionally incorporated by employing orthogonal frequency division multiplexing (OFDM) as wireless access technology. Also, an adaptative modulation & coding (AMC) scheme that determines a modulation scheme and a channel coding rate according to the channel status of the UE is applied.

The NR CN 1c-05 may perform functions, such as mobility support, bearer configuration, and quality of service (QoS) configuration. The NR CN refers to a device that is responsible for various control functions as well as a mobility management function for the UE, and may be connected to multiple base stations. Also, the next-generation mobile communication system may also interwork with the existing LTE system, and the NR CN is connected to an MME 1c-25 through a network interface. The MME is connected to the existing base station, an eNB 1c-30.

FIG. 1d illustrates a wireless protocol structure of a next-generation mobile communication system according to an embodiment of the disclosure.

With reference to FIG. 1d, a wireless protocol of the next-generation mobile communication system includes NR service data adaptation protocols (SDAPs) 1d-01 and 1d-45, NR packet data convergence protocols (PDCPs) 1d-05 and 1d-40, NR radio link controls (RLCs) 1d-10 and 1d-35 , and NR medium access controls (MACs) 1d-15 and 1d-30 in the UE and the NR base station (gNB), respectively.

Main functions of the NR SDAP 1d-01 or 1d-45 may include some of the following functions.
- A user data transmission function (transfer of user plane data)
- A function of mapping a QoS flow and a data bearer for uplink and downlink (mapping between a QoS flow and a DRB for both DL and UL)
- A function of marking a QoS flow ID for uplink and downlink (marking QoS flow ID in both DL and UL packets)
- A function of mapping a reflective QoS flow to a data bearer for uplink SDAP PDUs (reflective QoS flow to DRB mapping for the UL SDAP PDUs).

For the SDAP layer device, the UE may receive a configuration as to whether to use a header of the SDAP layer device or a function of the SDAP layer device for each PDCP layer device, each bearer, or each logical channel through an RRC message. When the SDAP header is configured, a 1-bit indicator of non-access stratum (NAS) reflective QoS and a 1 bit-indicator of AS reflective QoS of the SDAP header may instruct the UE to update or reconfigure mapping information on mapping of QoS flow and a data bearer in uplink and downlink. The SDAP header may include QoS flow ID information indicating QoS. The QoS information may be used as data processing priority or scheduling information to support a seamless service.

Main functions of the NR PDCP 1d-05, 1d-40 may include some of the following functions.
- A header compression and decompression function (ROHC only)
- A user data transmission function (transfer of user data)
- A sequential delivery function (in-sequence delivery of higher layer PDUs)
- A non-sequential delivery function (out-of-sequence delivery of higher layer PDUs)
- A reordering function (PDCP PDU reordering for reception)
- A duplicate detection function (duplicate detection of lower layer SDUs)
- A retransmission function (retransmission of PDCP SDUs)
- A ciphering and deciphering function (ciphering and deciphering)
- A timer-based SDU discard function (timer-based SDU discard in uplink.)

The reordering function of the NR PDCP layer device refers to a function of sequentially reordering PDCP PDUs received from a lower layer on the basis of a PDCP sequence number (SN), and may include a function of sequentially transferring the reordered data to a higher layer. Alternatively, the reordering function of the NR PDCP layer device may include a function of directly transmitting data regardless of the sequence, a function of recording PDCP PDUs lost due to the reordering, a function of reporting the status of the lost PDCP PDUs to a transmitting side, and a function of making a request for retransmitting the lost PDCP PDUs.

Main functions of the NR RLC 1d-10, 1d-35 may include some of the following functions.
- A data transmission function (transfer of higher layer PDUs)
- A sequential delivery function (in-sequence delivery of upper-layer PDUs)
- A non-sequential delivery function (out-of-sequence delivery of upper-layer PDUs)
- An ARQ function (error correction through ARQ)
- A concatenation, segmentation, and reassembly function (concatenation, segmentation and reassembly of RLC SDUs)
- A re-segmentation function (re-segmentation of RLC data PDUs)
- A reordering function (reordering of RLC data PDUs)
- A duplicate detection function (duplicate detection)
- An error detection function (protocol error detection)
- An RLC SDU discard function
- An RLC reestablishment function

The sequential delivery function (in-sequence delivery) of the NR RLC device refers to a function of sequentially transmitting RLC SDUs received from the lower layer to the higher layer. When one original RLC SDU is divided into a plurality of RLC SDUs and then received, the sequential delivery function (in-sequence delivery) of the NR RLC device may include a function of reassembling and transmitting the RLC SDUs, a function of reordering the received RLC PDUs on the basis of an RLC SN or a PDCP SN, a function of recording RLC PDUs lost due to the reordering, a function of reporting the status of the lost RLC PDUs to a transmitting side, and a function of making a request for retransmitting the lost RLC PDUs. When there are lost RLC SDUs, the sequential delivery function (in-sequence delivery) of the NR RLC device may include a function of sequentially transferring only RLC SDUs preceding the lost RLC SDUs to the higher layer or a function of, if a predetermined timer expires even though there are lost RLC SDUs, sequentially transferring all RLC SDUs received before the timer starts to the higher layer. Alternatively, the sequential delivery function (in-sequence delivery) of the NR RLC device may include a function of, if a predetermined timer expires even though there are lost RLC SDUs, sequentially transferring all RLC SDUs received up to now to the higher layer. Also, the NR RLC device may process the RLC PDUs sequentially in order in which they are received (according to the arrival order regardless of a serial number or a sequence number) and may deliver the RLC PDUs to the PDCP device regardless of the sequence thereof (out-of-sequence delivery). In the case of segments, the NR RLC device may receive segments that are stored in a buffer or are to be received in the future, reconfigure the segments to be one RLC PDU, process the RLC PDU, and then transmit the same to the PDCP device. The NR RLC layer may not include a concatenation function, and the function may be performed by an NR MAC layer, or may be replaced with a multiplexing function of the NR MAC layer.

The non-sequential function (out-of-sequence delivery) of the NR RLC device refers to a function of delivering RLC SDUs received from the lower layer directly to the higher layer regardless of the sequence of the RLC SDUs, and may include, when one original RLC SDU is divided into a plurality of RLC SDUs and then received, a function of reassembling and transmitting the RLC PDUs and a function of storing RLC SNs or PDCP SNs of the received RLC PDUs, reordering the RLC PDUs, and recording lost RLC PDUs.

The NR MAC 1d-15, 1d-30 may be connected to a plurality of NR RLC layer devices configured in one UE, and main functions of the NR MAC may include some of the following functions.
- A mapping function (mapping between logical channels and transport channels)
- A multiplexing and demultiplexing function (multiplexing/demultiplexing of MAC SDUs)
- A scheduling information reporting function
- A HARQ function (error correction through HARQ)
- A logical channel priority handling function (priority handling between logical channels of one UE)
- A UE priority handling function (priority handling between UEs by means of dynamic scheduling)
- An MBMS service identification function (MBMS service identification)
- A transport format selection function
- A padding function

The NR PHY layer 1d-20, 1d-25 performs an operation for channel-coding and modulating higher layer data to generate an OFDM symbol and transmitting the OFDM symbol through a wireless channel, or demodulating and channel-decoding the OFDM symbol received through the wireless channel and transmitting the demodulated and channel-decoded OFDM symbol to the higher layer.

FIG. 1e illustrates a structure of a next-generation mobile communication system according to still another embodiment of the disclosure.

With reference to FIG. 1e, a cell served by a beam-based operating NR gNB 1e-05 may include a plurality of transmission reception points (TRPs) 1e-10, 1e-15, 1e-20, 1e-25, 1e-30, 1e-35, and 1e-40.

Each of the TRPs 1e-10 to 1e-40 represents a block that separates some of a function of transmitting and receiving physical signals in an existing NR base station (eNB), and includes multiple antennas.

The NR gNB 1e-05 may be expressed as a central unit (CE), and the TRP may be expressed as a distributed unit (DU). Functions of the NR gNB 1e-05 and the TRP may be configured by separating each layer in PDCP/RLC/MAC/PHY layers as indicated by 1e-45. That is, the TRP may perform functions of the corresponding layer with only the PHY layer (1e-15, 1e-25), the TRP may perform functions of the corresponding layers with only the PHY layer and the MAC layer (1e-10, 1e-35, 1e-40), and the TRP may perform functions of the corresponding layers with only the PHY layer, the MAC layer, and the RLC layer (1e-20, 1e-30).

In particular, the TRPs 1e-10 to 1e-40 may use beamforming technology of transmitting and receiving data by generating narrow beams in a plurality of directions using multiple transmit/receive antennas.

A UE 1e-50 may be connected to the NR gNB 1e-05 and an external network through the TRPs 1e-10 to 1e-40.

The NR gNB 1e-05 may support connection between UEs and a core network (CN), particularly, an AMF/SMF 1e-50 by collecting status information, such as buffer status, available transmission power status, channel status of the UEs, and by performing scheduling, in order to provide services to users.

The disclosure proposes a method of improving existing operation in relation to a unified transmission configuration indicator (unified TCI) state structure used to indicate a beam to be used when transmitting and receiving data resources through the entire channel used by the UE in the next-generation mobile communication system. Unlike the existing TCI framework, the unified TCI framework supports a TCI state that may be commonly applied to uplink and downlink although there is a difference in a signaling structure depending on a mode.
- Separate UL/DL TCI state mode: Configure and manage separate TCI state for uplink and downlink
- Joint TCI DL/UL state mode: Configure and manage TCI state commonly applied to uplink and downlink

Also, unlike the existing TCI state structure, the unified TCI state may be commonly applied to physical downlink control channel (PDCCH)/ physical downlink shared channel (PDSCH)/ physical uplink control channel (PUCCH)/ physical uplink shared channel (PUSCH). That is, if a beam is indicated through the unified TCI state, the corresponding beam may be applied to the entire channel transmission in uplink/downlink. For reference, there was a separate beam management procedure of indicating spatial relation in uplink and indicating a TCI state in downlink.

The existing unified TCI framework supports only a beam management operation, for example, inter-cell beam management (ICBM), when only a single TRP is present within a serving cell. However, the disclosure improves this and also supports a transmission and reception technique supported when a plurality of TRPs are present in a single serving cell through a unified TCI framework. In particular, in relation to supporting a multi TRP transmission and reception enhancement technique to which the above-described unified TCI framework is applied, the disclosure proposes a method of supporting this by introducing a new MAC CE.

FIG. 1f illustrates a method to which a unified TCI state is applied according to an embodiment of the disclosure.

With reference to FIG. 1f, a procedure of applying a unified TCI state in a new radio (NR) system that the disclosure refers to and a unified TCI state MAC CE are described. FIG. 1f illustrates a specific example to explain how the unified TCI state functionally operates.

A UE in a radio resource control (RRC) connected state may perform data transmission and reception with a base station (serving cell, for example, PCell), may perform layer 1 channel measurement according to base station configuration, and may report a result value to the base station to change to an optimal beam. The base station may identify a layer 1 channel measurement value reported by the UE, may know which beam is currently best for the UE, and may instruct change to the corresponding beam. Hereinafter, a procedure of indicating an optimal beam to the UE through a unified TCI framework is described.

Although not illustrated in the drawing, the base station may configure the unified TCI state to the UE through RRC configuration. A method of configuring the unified TCI state may refer to Table 1 to Table 3 below.
1. Joint UL/DL mode: configure UL and DL to share the same TCI configuration (in PDSCH-Config) 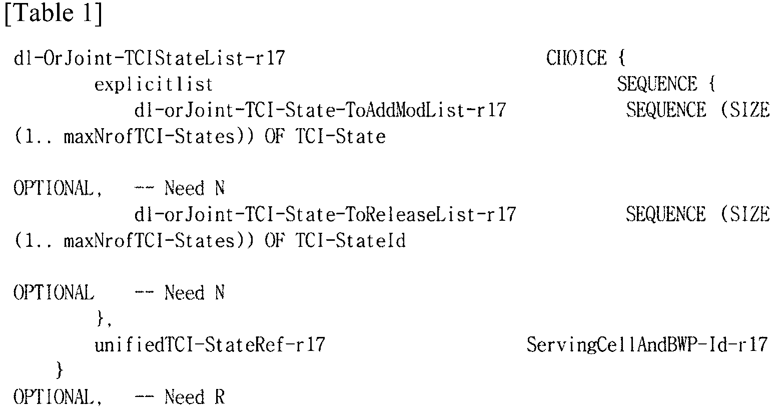
2. Separate UL/DL mode: Each of UL and DL provides TCI configuration. The TCI state for DL follows configuration in dl-OrJoint-TCIStateList-r17 (in PDSCH-Config), and the TCI state for UL follows ul-TCI-StateList-r17 (in BWP-UplinkDedicated).

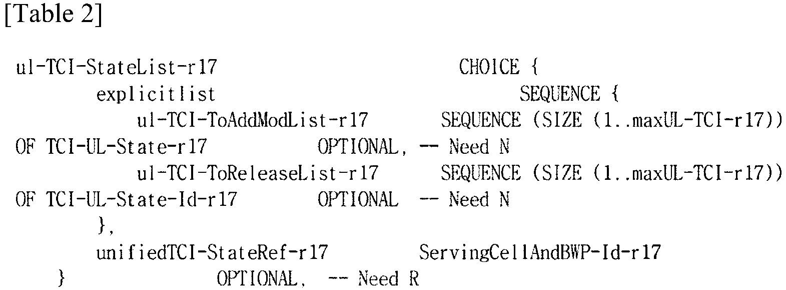

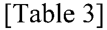

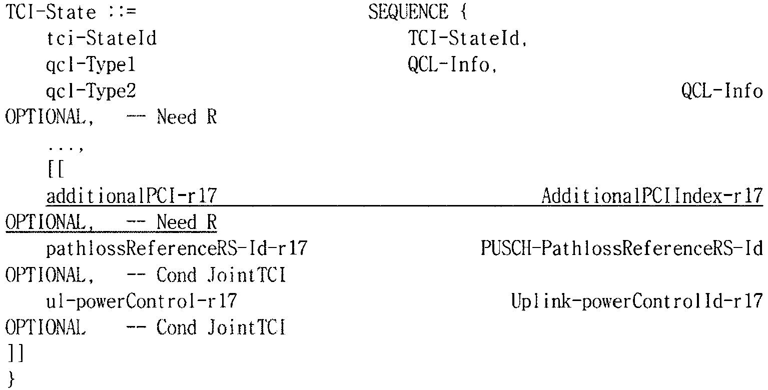

For reference, a beam indicated in the unified TCI state may also indicate a TCI state in a cell (additionalPCI-r17) of which physical cell identity (PCI) is different from that of a serving cell.

In operation 1f-05, the base station may instruct the UE to activate one or a plurality of TCI states through a unified TCI state activation/deactivation medium access control (MAC) control element (CE).

1f-01 illustrates a structure of the unified TCI state MAC CE. As illustrated in the drawing, the corresponding MAC CE 1f-01 may indicate a plurality of TCI states indicated for each of serving cell and uplink (UL)/downlink (DL) bandwidth part (BWP). Here, field P is an indicator indicating whether uplink/downlink is separately indicated for the indicated unified TCI state. Description related to the field P refers to the following description.
- Pᵢ: This field indicates whether each TCI codepoint has multiple TCI states or single TCI state. If Pᵢ field is set to 1, it indicates that i^{th} TCI codepoint includes the DL TCI state and the UL TCI state. If Pᵢ field is set to 0, it indicates that i^{th} TCI codepoint includes only the DL/joint TCI state or the UL TCI state. The codepoint to which a TCI state is mapped is determined by its ordinal position among all the TCI state ID fields;

In operation 1f-10, the base station may indicate a single unified TCI state to be substantially applied to the UE through downlink control information (DCI). For reference, if only a single TCI state code point is transmitted through the MAC CE in operation 1f-05, the UE may activate the corresponding TCI state without receiving DCI. The DCI may schedule a downlink PDSCH, and may indicate only a beam without PDSCH scheduling.

If the DCI schedules the downlink PDSCH, PDSCH transmission is accompanied as in operation 1f-15. When the DCI does not schedule the downlink PDSCH, operation 1f-15 may be omitted without performing separate PDSCH transmission.

Then, in operation 1f-20, the UE may transmit an acknowledgement (ACK) signal indicating that the DCI or the PDSCH is well received from the base station through the PUCCH.

If a time equivalent to a beam application time (BAT) 1f-25 passes after transmitting the ACK signal indicating a time point of actually applying the indicated unified TCI state through the PUCCH, the UE may apply the unified TCI state indicated in a first slot to all channels (PDCCH/PDSCH/PUCCH/PUSCH) in uplink and downlink. If the time equivalent to the BAT 1f-25 passes after transmitting the ACK signal through the PUCCH, the UE may use a previously used TCI state as is until the first slot. A new beam in which activation is indicated by the unified TCI state may be applied to all channel transmissions 1f-40 and 1f-45 after 1f-35 (1f-50).

FIG. 1g illustrates a method in which a unified TCI state is applied to a plurality of TRPs according to an embodiment of the disclosure.

With reference to FIG. 1g, a rule applicable to a plurality of TRPs (multiple TRPs) by applying the improved unified TCI state structure proposed in the disclosure is described. More specifically, here describes how the UE manages and applies TCI states 1g-05 and 1g-10 indicated by two TRPs, respectively, when they are indicated and updated with a medium access control (MAC) control element (CE) or downlink control information (DCI). Also, to this end, a method of applying different activation beams for each channel by applying channel-wise TCI state application techniques (semi-static RRC configuration, new TCI selection field within DCI) that are overall applied to the disclosure is described.

A unified TCI state activation MAC CE for supporting a plurality of TRPs based on a single physical downlink control channel (PDCCH) according to an embodiment of the disclosure needs to indicate whether a TCI state mapped and indicated with a TCI codepoint is from a first TRP or a second TRP, whether both are applicable, or whether neither is applicable. A TCI state application rule applied in the disclosure is described with reference to FIG. 1g.

The UE may receive an initially applied TCI codepoint {TCI#1 1g-15, TCI#2 1g-20)} through a MAC CE or DCI, and may store and manage the received TCI states as activated TCI states. Here, the two TCI states indicated by the TCI codepoint may be those received from a plurality of TRPs. Alternatively, two TCI states indicated by the TCI codepoint may be a plurality of TCI states indicated by a single TRP.

Then, the base station may indicate a TCI codepoint {TCI#3, none} 1g-30 through a new MAC CE or DCI in a time T1 1g-25. The UE that receives the TCI codepoint {TCI#3, none} through the new MAC CE or DCI may apply and manage a beam to be effectively applied in a next stage with {TCI#3, TCI#2} (1g-35, 1g-40).

Here, it should be noted that the beam the UE effectively applies is not the indicated TCI codepoint {TCI#3, none}. The indicated TCI codepoint indicates a TCI state that the UE needs to update. However, when it is "none" (no indicated TCI), the UE keeps a previously indicated TCI state. That is, the UE updates from the existing TCI#1 to TCI#3 since the first TCI is indicated as "TCI#3", and keeps the previous indicated TCI state as TCI #2 since the second TCI is indicated as "none".

The same rule applies, so the UE may receive a TCI codepoint {none, TCI#4} 1g-50 through a new MAC CE or DCI in a time T2 1g-45. The UE that receives the TCI codepoint {none, TCI#4} 1g-50 through the new MAC CE or DCI may apply and manage a beam to be effectively applied in a next stage with {TCI#3, TCI#4} (1g-55, 1g-60).

Also, the UE may receive a TCI codepoint {TCI#5, TCI#6} 1g-70 through a new MAC CE or DCI in a time T3 1g-65. The UE that receives this may apply and manage a beam to be effectively applied in a next stage with {TCI#5, TCI#6} (1g-75, 1g-80).

The reason for introduction of the rule and the method of differently activating a TCI state to be applied for each actual channel are as follows. The unified TCI state is a structure for commonly applying a beam change method applied to all channels, as described above in FIG. 1f, and the indicated TCI state is applied to all channels after a beam application time (BAT).

Meanwhile, in actual implementation, there may be a case in which not all channels use the same beam. Also, a plurality of TCI states may not be applied to a specific channel. To address this, the overall TCI state application rule of the present invention is introduced and an operation of indicating a TCI state to be semi-statically or dynamically applied for each channel is required. Table 4 below shows how the TCI state is indicated for each channel.

**[Table 4] Application of unified TCI state for each channel**

| **Channel/signal** | **TCI selection scheme** |
|---|---|
| PDCCH | RRC config. (1^{st}/2^{nd}/both/non) per CORESET |
| PDSCH by DCI format 1_1/1_2 | Determining by TCI selection field in the DCI |
| PDSCH by DCI format 1_0 | RRC config. (1^{st}/2^{nd}/both) |
| DG, Type-2 CG PUSCH by DCI format 0_1/0_2 | Determining by SRS resource set indicator in the DCI |
| DG, Type-2 CG PUSCH by DCI format 0_0 | Applying 1^{st} indicated TCI state |
| Type-1 CG PUSCH | RRC config. (1^{st}/2^{nd}/both) per Type-1 CG config |
| PUCCH | RRC config. (1^{st}/2^{nd}/both) per PUCCH resource/resource group |
| AP CSI-RS for CSI/BM | RRC config. (1^{st}/2^{nd}) per CSI-RS resource or per resource set |
| P/SP/AP SRS for CB/NCB/AS & AP SRS for BM | RRC config. (1^{st}/2^{nd}) per SRS resource set |

In particular, for a PDSCH reception beam indication method through DCI format 1_1/1_2, an active beam used for the corresponding channel reception may be dynamically indicated through a "TCI selection field" 1g-85 newly introduced in DCI.

If a MAC CE indicates only a single TCI codepoint, there may be no separate DCI beam indication. In this case, all beams indicated through the MAC CE may be considered to be activated. Alternatively, a semi-static indication method for PDSCH reception may be present as RRC configuration, or a semi-static indication method applied to PDCCH reception may also be applied as is to PDSCH reception. Here, the TCI selection field 1g-85 is a 2-bit field newly introduced in DCI 1_1/1_2, and may indicate the following states.
- 00: Activate a first TCI state among indicated TCI states
- 01: Activate a second TCI state among indicated TCI states
- 10: Activate both TCI states among indicated TCI states
- 11: Present as a reserved value

FIG. 1h illustrates a method of transmitting and receiving data by applying a unified transmission configuration indication (TCI) framework according to an embodiment of the disclosure.

More specifically, FIG. 1h illustrates the entire procedure of applying a data enhancement technique through a plurality of TRPs based on a single PDCCH (DCI) by applying the unified TCI framework in a new radio (NR) system.

The NR system is designed to enable data transmission and reception between a UE and a base station using a beam having directionality. Data communication using the beam having directionality has the characteristic of supporting a high data rate through wide bandwidth and resources that come with using high frequency. Meanwhile, there may be a constraint that the beam having directionality needs to be well-configured.

In the NR system, the UE may basically measure a synchronization signal through a synchronization signal (SS)/physical broadcast channel (PBCH) block in an initial access stage, and data transmission and reception may be performed through a beam direction in which the synchronization signal is detected. Then, a beam management technique that indicates an optimal beam to the UE may be applied based on a layer 1 channel measurement report that the base station receives from the UE.

The beam management technique proposed herein describes the entire procedure performed through unified TCI state indication, and includes a radio resource control (RRF) configuration operation, an operation of activating a plurality of candidate TCI states through a medium access control (MAC) control element (CE), and an operation of indicating a beam for actual data transmission and reception through downlink control information (DCI).

As described above, the unified TCI state structure differs from the existing TCI state framework in that it is possible to indicate and use a common TCI state in uplink and downlink. The detailed operation of the unified TCI state framework according to an embodiment of the disclosure refers to FIGS. 1f and 1g.

In operation 1h-05, a UE 1h-01 in an idle mode (RRC_IDLE) may camp on a specific base station/cell 1h-02, and may perform an RRC connection procedure to a base station PCell, 1h-02 due to occurrence of data to be transmitted. The specific base station/cell 1h-02 may include at least one transmission reception point (TRP). For example, the specific base station/cell 1h-02 may include a TRP1 1h-03 and a TRP2 1h-04.

In the idle mode, the UE may not transmit data due to disconnection from a network for power saving of the UE, and needs to shift to a connected mode (RRC_CONNECTED) for data transmission.

Also, that the UE camps on the specific base station/cell indicates that the UE is receiving a paging message to determine whether data is coming in downlink while staying in the corresponding cell.

In operation 1h-10, if the UE 1h-01 succeeds in an access procedure to the base station 1h-02, the UE 1h-01 may shift to the connected mode (RRC_CONNECTED), and the UE 1h-01 in the connected mode may transmit and receive data to and from the base station 1h-02.

In operation 1h-15, the UE 1h-01 in the connected state may perform a UE capability reporting procedure with the base station 1h-02.

More specifically, the UE 1h-01 may receive a UE capability request message from the base station 1h-02. The UE capability report request message may be transmitted through an RRC message.

Then, the UE 1h-02 that receives the UE capability report request message may generate a UE capability information message (e.g., UECapabilityInformation) and may report the same to the base station 1-02 in response to the RRC message (or UE capability report request message).

The UE capability report RRC message may include UE capability indicating whether, particularly, the unified TCI state framework supports single DCI-based multiple TRB techniques (hereinafter, "sDCI based mTRP operation"). The UE capability may be reported using one of UE-specific, band-specific, and band combination-specific methods.

Then, in operation 1h-20, the UE 1h-01 may receive an RRC message that includes multi TRP configuration information and/or unified TCI configuration information.

More specifically, the UE 1h-01 may receive configuration (config) related to a communication enhancement technique through the unified TCI and a plurality of TRPs (multiple TRP (mTRP)) from the base station 1h-0,2 and may perform a procedure of changing to an optimal beam for the corresponding operation.

In operation 1h-20, the UE 1h-01 may be configured with a unified TCI state for each BWP of a serving cell through RRC configuration. (Up to 128 beams may be configured.)

In operation1h-20, the UE may be directly configured with the unified TCI state applied to uplink and downlink. Alternatively, the UE may receive a serving cell and BWP indicator to which the corresponding configuration is provided and may apply the same. A unified TCI state mode (joint TCI state mode or separate TCI state mode) may also be configured. Details may be as shown in [Table 5] ASN.1 below.

Also, parameters related to the data communication enhancement technique through the plurality of TRPs may also be configured.

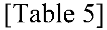

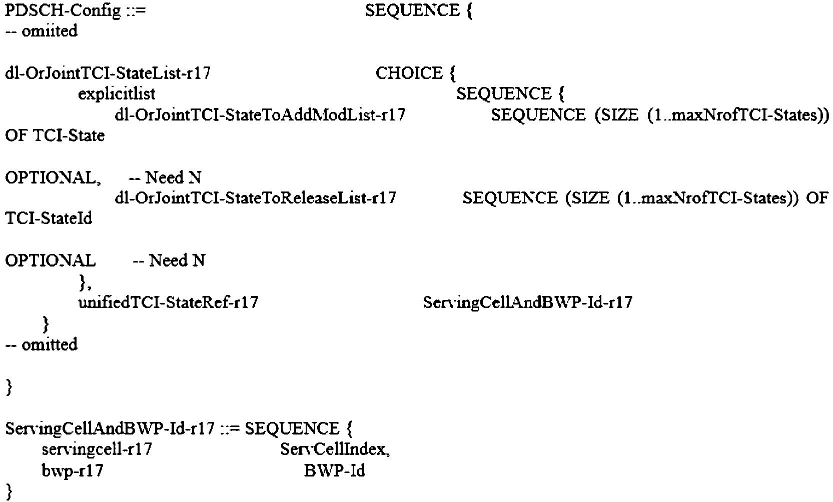

Also, when a plurality of TCI states are indicated by the MAC CE or DCI for each channel in addition to the unified TCI state configuration, configuration (applyIndicatedTCIState) indicating which TCI state to apply may be added for each channel. For detailed configuration, see Table 4 in FIG. 1g.

Table 6 below shows an example of applyIndicatedTCIState in the PDCCH, and a corresponding field may be newly configured within a ControlResourceSet IE.

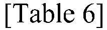

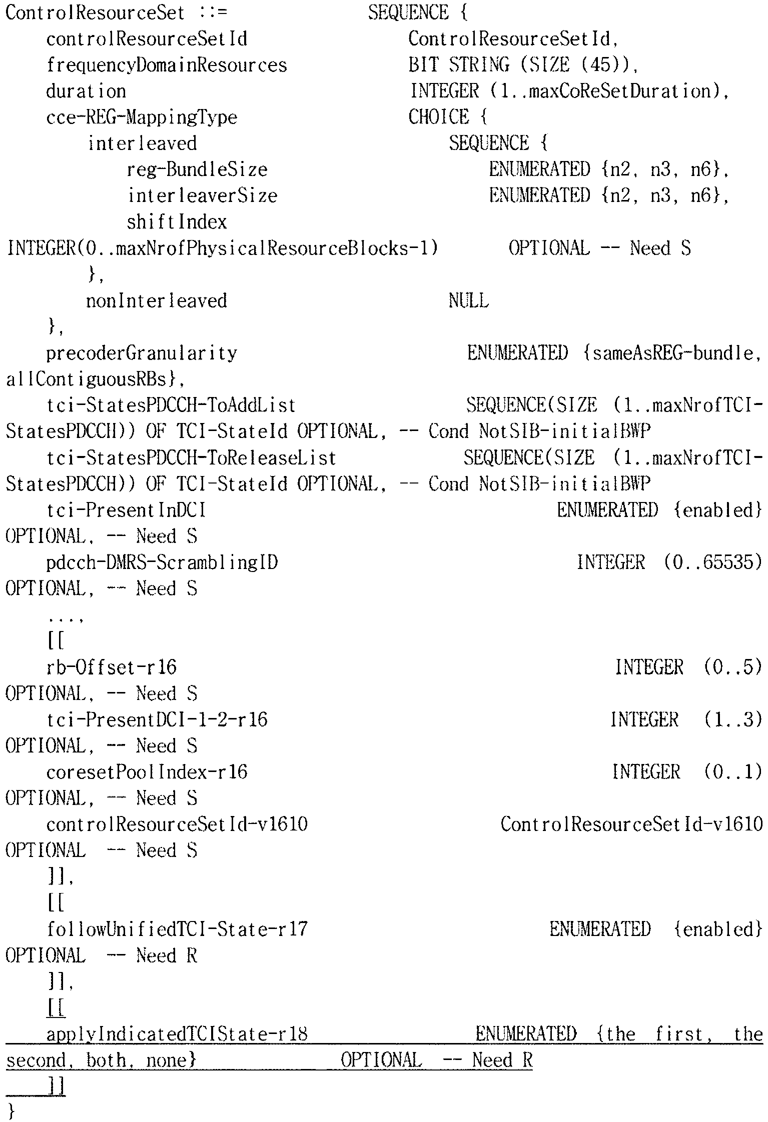

For reference, a followUnifiedTCI-State-r17 field configured within the ControlResourceSet (CORESET) refers to a field that indicates whether the unified TCI state is applied to the corresponding ControlResourceSet.

When the followUnifiedTCI-State-r17 field is configured (set to TRUE), the UE may apply a beam indicated by the unified TCI state (beam indicated by MAC CE or DCI) to PDCCH reception and PDSCH reception.

Meanwhile, when the followUnifiedTCI-State-r17 field is not configured, the UE may not use the unified TCI state, a Rel-15/16-based TCI state indication MAC CE is applied to the PDCCH reception and a Rel-15/16-based TCI state activation MAC CE and DCI-type beam indication is applied to the PDSCH reception.

An association operation between the followUnifiedTCI-State-r17 field configured within ControlResourceSet and a newly introduced applyIndicatedTCIState-r18 field may be performed using the following two methods.
1. First unified TCI framework association operation: The new unified TCI state rule (applyIndicatedTCIState field configuration) described above in Table 4 of FIG. 1g is applied only when an operation related to followUnifiedTCI-State-r17 configuration is configured (when set to TRUE).
   - applyIndicatedTCIState requires a condition that it may be configured only when followUnifiedTCI-State-r17 configuration is TRUE.
   - Since the prerequisite of applyIndicatedTCIState is followUnifiedTCI-State-r17 configuration, the new unified TCI state rule (applyIndicatedTCIState field configuration) in the disclosure may operate only when the existing followUnifiedTCI-State related operation is performed.
   - Switch between the followUnifiedTCI-State operation and the unified TCI state rule (applyIndicatedTCIState field configuration) operation is possible without separate RRC configuration. That is, switch is possible in such a manner that the base station transmits a MAC CE for each function to the UE, and the UE may perform an operation accordingly.
2. Second unified TCI framework association operation: The unified TCI state rule (applyIndicatedTCIState field configuration) described in Table 4 of FIG. 1g above is applied regardless of a case in which followUnifiedTCI-State-r17 configuration and related operation are configured.
   - applyIndicatedTCIState may be configured regardless of whether followUnifiedTCI-State-r17 configuration is present or absent.
   - Since the prerequisite of applyIndicatedTCIState is not followUnifiedTCI-State-r17 configuration, the new unified TCI state rule (applyIndicatedTCIState field configuration) in the disclosure may be determined only by the presence of the corresponding field.
   - When the followUnifiedTCI-State configuration is absent and only the new unified TCI state rule (applyIndicatedTCIState field configuration) operation is configured, the base station needs to perform re-configuration through separate RRC re-configuration when switch to the followUnifiedTCI-State-related operation is required. That is, function transition is possible in such a manner that the base station performs RRC re-configuration for each function and then transmits a MAC CE to the UE, and the UE performs an operation accordingly.

Also, regardless of application of the methods, when the new unified TCI state rule (applyIndicatedTCIState field configuration) is applied, the UE may operate as follows.
- When the applyIndicatedTCIState field indicates 'first', 'second', or 'both', the UE may apply an indicated beam to PDCCH reception through the corresponding CORESET.
- On the other hand, when the applyIndicatedTCIState field indicates 'none', the UE does not use any beam indicated by the unified TCI state (indicated by MAC CE or DCI) for the PDCCH reception through the corresponding CORESET.

In operation 1h-25, the base station 1h-02 may transmit the unified TCI MAC CE to the UE 1h-01.

More specifically, the base station 1h-02 may instruct the UE to activate a plurality of beams with the MAC CE for the unified TCI state configured using the RRC message. Here, a TCI state for up to eight beam groups may be activated (when considering uplink and downlink as a single group).

The purpose of the MAC CE may be understood as a process of selecting candidate beams that may be dynamically indicated by DCI during TCI state configuration configured using RRC, and may reduce the number of TCI states to be managed by the UE and may reduce the number of bits indicated by DCI.

In particular, in operation 1h-25, a new MAC CE structure proposed in the disclosure may be introduced. The MAC CE used may vary depending on whether the above-described data communication enhancement technique through the plurality of TRPs is a single PDCCH-based multi TRP operation or a multi PDCCH-based multi TRP operation. The detailed MAC CE structure is described below in FIG. 1i.

In operation 1h-30, the UE 1h-01 and the base station 1h-02 may transmit and receive DCI and ACK information for unified TCI indication.

More specifically, the UE may indicate a specific beam among candidate beams indicated by the MAC CE through an indicator of DCI. The indicator indicating the specific beam may include 3 bits. DCI used in operation1h-30 indicates a different beam depending on a type of a MAC CE previously received by the UE. In the case of the single PDCCH-based multi TRP operation, one DCI may indicate all of a plurality of beams. Meanwhile, in the case of the multi PDCCH-based multi TRP operation, one DCI may indicate only a single beam, so DCI reception is required for each TRP.

Also, when the UE receives DCI and PDSCH reception scheduled by the DCI is performed well, the UE 1h-01 may deliver (or transmit) ACK for the corresponding reception to the base station 1h-02 through the PUCCH.

If the number of TCI codepoints included in the MAC CE is only one in the above operation 1h-25, operation 1h-30 may be omitted. That is, the TCI codepoint indicated by the MAC CE may be immediately activated.

Actual beam configuration configured and indicated in the above operations 1h-20 and 1h-25 may be performed for each BWP. That is, the entire operation may be applied to a single serving cell (or TRP) and a single BWP that belongs to the corresponding cell. If beam configuration is desired to be changed for another serving cell and a specific BWP of the corresponding serving cell, it may be enabled by repeatedly performing the entire operation for the corresponding cell.

Since a plurality of cells may have the same beam configuration, this repetitive operation may be omitted and beam configuration in a plurality of serving cells may be simultaneously updated/activated. In the case of simultaneously updating/activating the beam configuration in the plurality of serving cells, it may reduce latency caused by the repetitive operation and may also significantly reduce signaling overhead. Therefore, the base station may transmit a group (cell list) for which the same beam configuration may be simultaneously updated and activated through RRC configuration, such that TCI state activation may simultaneously occur even in the plurality of cells having the same beam configuration when the procedure is performed.

In operation 1h-35, the UE 1h-02 may apply the indicated unified TCI state to the entire channel transmission and reception.

More specifically, through the procedure, the unified TCI state is indicated through DCI and, until the UE transmits PUCCH ACK in response thereto, the UE performs data transmission and reception by applying a previously used beam (TCI state).

A point in time at which the actual indicated TCI state is applied is a first slot after the UE transmits PUCCH ACK and a time equivalent to a beam application time (BAT) passes (1h-35). That is, depending on which mode of the data communication enhancement technique through the plurality of TRPs is applied, a point in time at which the indicated beam is applied and a data transmission and reception operation corresponding thereto may vary. Also, a beam that is activated at a corresponding point in time may vary depending on an apply TCI state that is semi statically configured for each transmission channel.

Then, in operation 1h-40, the base station 1h-02 may indicate a unified TCI technique change to the UE. The unified TCI technique change may be performed through reconfiguration or MAC CE transmission for another purpose. The UE may apply the data communication enhancement technique through a plurality of TRPs configured in advance through the indicated beam.

FIG. 1ia to FIG. 1if illustrate the structure of a medium access control (MAC) control element (CE) according to an embodiment of the disclosure.

FIG. 1ia to FIG. 1if illustrate the structure of the MAC CE for unified TCI state activation to support an enhanced data transmission and reception technique through a plurality of TRPs based on one downlink control information (DCI) proposed in the disclosure.

According to an embodiment of the disclosure, to support the enhanced data transmission and reception technique (single PDCCH-based multi PDSCH transmission) through the plurality of TRPs based on the currently defined "Unified TCI States Activation/Deactivation MAC CE 1f-01", it is possible to introduce a new MAC CE and to add a new field.

The existing MAC CE structure includes a serving cell ID and a UL/DL BWP ID as described in 1f-01, and includes a bitmap "Pi" field indicating whether both uplink/downlink TCI states are present, D/U, and a TCI state index. Through the existing MAC CE, a unified TCI state, that is, a beam indicated in a single serving cell/BWP may be indicated.

For reference, since the unified TCI state may also indicate a TCI state defined in a neighboring cell, a beam present in an inter-cell may be indicated. However, as known from the MAC CE structure, it is an operation of indicating a candidate beam available in a single TRP within a single serving cell/BWP and thus, may not indicate a beam (TCI state) applied to a plurality of TRPs. Therefore, in the case of following the existing MAC CE structure, it is possible to support the single PDCCH-based multi TRP operation.

The disclosure proposes a beam indication method for supporting the enhanced data transmission and reception technique (single PDCCH-based multi PDSCH transmission) through the plurality of TRPs described above and, particularly, describes the MAC CE design for this.

Basically, since the beam is indicated using the unified TCI state framework, the basic unified TCI state procedure (the entire candidate beam configuration with RRC, beam activation with MAC CE, beam indication with DCI) described in FIG. 1f may be applied as is. The difference lies in that only indication for a single TRP is possible when activating and indicating the existing unified TCI state, but the disclosure enables a beam to be indicated using the unified TCI state for the plurality of TRPs.

To indicate the beam using the unified state for the plurality of TRPs, the maximum number of TCI states that may be indicated for each cell/BWP, a type of a TCI state that may be applied between different TRPs (e.g., resources (synchronization signal block (SSB), channel state information-reference signal (CSI-RS), sounding reference signal (SRS)) that the TCI state refers to), and a method of identifying in which mode to operate through a most important MAC CE.

Also, for a repetition-based multi TRP operation, which TRP is associated with which TCI state repetitive resource and will be transmitted may be configure through RRC configuration and accordingly, the operation may be performed. The operation after the RRC configuration may vary depending on whether the UE performs the single PDCCH-based multi PDSCH transmission, and may receive a MAC CE and DCI associated with this and may receive an associated beam indication. That is, the unified TCI state applied to the UE is determined according to the rule of applying the unified TCI state framework described in FIG. 1g and the rule of indicating a beam that is actually activated in each channel (semi-static indication through RRC configuration or indication through TCI selection field).

FIG. 1ia to FIG. 1if propose two MAC CE designs by applying the above-described considerations for the single PDCCH-based multi PDSCH transmission using the unified TCI state (1i-05). However, the scope of the present invention is not limited thereto, and includes all MAC CE designs that are expanded and designed from design key matters described in a large frame in addition to the MAC CE designs proposed in the present invention. Also, the scope of the present invention includes both a case in which the unified TCI state framework is set to a joint TCI state mode and a case in which it is set to a separate TCI state mode for each MAC CE design method.
1) First MAC CE design method (1i-05)
   - It is a method of scheduling data transmission through two TRPs in a single PDCCH and performing data transmission and reception accordingly. Therefore, there is a need for a method that simultaneously indicates a beam (TCI state) applied to data transmission and reception of two TRPs in a single PDCCH through the unified TCI state. That is, since a beam for two TRPs is indicated in a single PDCCH, a single MAC CE and DCI transmission are required to indicate the beam for two TRPs. For reference, when the MAC CE indicates only a single TCI codepoint (TCI state for a set of TRP1 and TRP2), TCI codepoint indication through DCI is omitted.
      ■ A maximum of eight TCI state codepoints may be indicated (the number may more increase). Here, naming as a codepoint considers, as a single codepoint, a case in which a maximum of two TRPs indicate both uplink/downlink TCI state indications. That is, if both TRPs are applied and uplink and downlink beams are indicated to all TCI states, a maximum of 32 TCI states may be indicated using a MAC CE.
   - MAC CE design method
      ■ Option A-1 (FIG. 1i-10): MAC CE when set to the separate TCI state mode
         ◆ TCI state mapping pattern (see Table 1i-20)
            - As described above, a single TCI codepoint may include TCI states indicated for TRP1 and TRP2. Also, when the separate TCI state mode is configured, a maximum of four TCI states need to be indicated in a single TCI codepoint since TCI states applied to UL and DL need to be separately indicated.
            - To express this, a P_ij field is introduced and the P_ij field includes 4 bits. That is, it is expressed as {DL TCI state of TRP1, UL TCI state of TRP1, DL TCI state of TRP2, UL TCI state of TRP2} and is expressed in each row of Table 1i-20. It needs to cover 16 cases including a total of 4 bits, which is expressed by the P_ij field.
            - Here, index j is an indicator for indicating each bit in a total of four bits, and index j is for indicating a TCI codepoint index. In the case of supporting a maximum of eight TCI codepoints, i has a maximum value of 8.
         ◆ Other fields present within MAC CE
            - CodePoint field (3 bits) 1i-30: It is an indicator for indicating how many TCI codepoints are indicated. The following P_ij field 1i-40 and TCII state ID field 1i-50 are determined according to the corresponding value.
            - P_ij field (4 bits for each TCI codepoint, maximum 32 bits) 1i-40: It is a field that indicates a TCI state mapping pattern (Table 11-20), see the description.
            - TCI state ID (7 bits) 11-50: It is a TCI state indicated through the unified TCI state TCI framework, and indicates a TCI state ID indicated as dl-orJoint-TCI-State in the case of DL and indicates a TCI state ID indicated as TCI-UL-State in the case of UL. The TCI state indicated in the TCI codepoint is determined according to the above CodePoint and P_ij field.
            - Other fields (e.g., serving cell ID, BWP ID) use the same content defined in the existing MAC CE.
      ■ See FIG. 1f-01
      ■ Option A-2 (FIG. 1i-60): MAC CE when set to the joint TCI state mode
         ◆ TCI state mapping pattern (see Table 1i-70)
            - As described above, a single TCI codepoint includes TCI states indicated for TRP1 and TRP2. Also, when the joint TCI state mode is configured, a maximum of two TCI states need to be indicated in a single TCI codepoint since a single common TCI state needs to be indicated as a TCI state applied to UL and DL.
            - To express this, the P_ij field is introduced and the P_ij field includes 2 bits. That is, it is expressed as {joint TCI state of TRP1, joint TCI state of TRP2} and expressed in each row of Table 1i-20. It needs to cover 16 cases including a total of 4 bits, which is expressed by the P_ij field.
            - Here, index j is an indicator for indicating each bit of a total of 2 bits, and index i is to indicate a TCI codepoint index. In the case of supporting a maximum of eight TCI codepoints, i has a maximum value of 8.
         ◆ Other fields present within MAC CE
            - CodePoint field (3 bits) 1i-80: It is an indicator for indicating how many TCI codepoints are indicated. The following P_ij field 1i-90 and TCII state ID field 1i-100 are determined according to the corresponding value.
            - P_ij field (2 bits for each TCI codepoint, maximum 16 bits) 1i-90: It is a field that indicates a TCI state mapping pattern (Table 1i-70), see the description.
            - TCI state ID (7 bits) 1i-100: It is a TCI state indicated through the unified TCI state TCI framework, and in the case of DL and UL, DL and UL are unified and indicated through a joint TCI state ID indicated as dl-orJoint-TCI-State. The TCI state indicated in the TCI codepoint is determined according to the above CodePoint and P_ij field.
            - Other fields (e.g., serving cell ID, BWP ID) use the same content defined in the existing MAC CE.
      ■ See FIG. 1f-01
2) Second MAC CE design method
   ■ Option B-1 (FIG. 1i-110): MAC CE when set to the separate TCI state mode
      ◆ TCI state mapping pattern (see Table 1i-120)
         - As described above, a single TCI codepoint may include TCI states indicated for TRP1 and TRP2. Also, when the separate TCI state mode is configured, a maximum of four TCI states need to be indicated in a single TCI codepoint since TCI states applied to UL and DL need to be separately indicated.
         - To express this, a P_ij field is introduced and the P_ij field includes 3 bits. Here, with reference to Table 1i-120, a bitmap is defined in which the number of TCI states indicated in DL and the number of TCI states indicated in UL for a single TCI codepoint are mapped to all cases, and this is expressed as the P_ij field.
         - For example, in the table, the number of DL TCI states may range from 0 to 2 and the number of UL TCI states may also range from 0 to 2. Therefore, when they are combined, eight cases occur and the corresponding cases are mapped to the P_ij field.
         - Here, index j is an indicator for indicating each bit in a total of three bits, and index j is for indicating a TCI codepoint index. In the case of supporting a maximum of eight TCI codepoints, i has a maximum value of 8.
      ◆ Other fields present within MAC CE
         - CodePoint field (3 bits) 1i-130: It is an indicator for indicating how many TCI codepoints are indicated. The following P_ij field 1i-140 and TCII state ID field 1i-150 are determined according to the corresponding value.
         - P_ij field (3 bits for each TCI codepoint, maximum 24 bits) 1i-140: It is a field that indicates a TCI state mapping pattern (Table 11-120), see the description.
         - TCI state ID (7 bits) 1i-150: It is a TCI state indicated through the unified TCI state TCI framework, and indicates a TCI state ID indicated as dl-orJoint-TCI-State in the case of DL and indicates a TCI state ID indicated as TCI-UL-State in the case of UL. The TCI state indicated in the TCI codepoint is determined according to the above CodePoint and P_ij field.
         - Other fields (e.g., serving cell ID, BWP ID) use the same content defined in the existing MAC CE.
   ■ See FIG. 1f-01
   ■ Option B-2 (FIG. 1i-170): MAC CE when set to the joint TCI state mode
      ◆ TCI state mapping pattern (see Table 11-180)
         - As described above, a single TCI codepoint includes TCI states indicated for TRP1 and TRP2. Also, when the joint TCI state mode is configured, a maximum of two TCI states need to be indicated in a single TCI codepoint since a single common TCI state needs to be indicated as a TCI state applied to UL and DL.
         - To express this, the P_ij field is introduced and the P_ij field includes 2 bits. Here, with reference to Table 1i-180, a bitmap is defined in which the number of TCI states indicated in TRP1 and the number of TCI state indicated in TRP2 for a single TCI codepoint are mapped to all cases, and this is expressed as the P_ij field.
         - Here, index j is an indicator for indicating each bit of a total of 2 bits, and index i is to indicate a TCI codepoint index. In the case of supporting a maximum of eight TCI codepoints, i has a maximum value of 8.
      ◆ Other fields present within MAC CE
         - CodePoint field (3 bits) 1i-190: It is an indicator how many TCI codepoints are indicated. The following P_ij field 1i-200 and TCII state ID field 1i-210 are determined according to the corresponding value.
         - P_ij field (2 bits for each TCI codepoint, maximum 16 bits) 1i-200: It is a field that indicates a TCI state mapping pattern (Table 1i-180), see the description.
         - TCI state ID (7 bits) 1i-210: It is a TCI state indicated through the unified TCI state TCI framework, and in the case of DL and UL, DL and UL are unified and indicated through a joint TCI state ID indicated as dl-orJoint-TCI-State. The TCI state indicated in the TCI codepoint is determined according to the above CodePoint and P_ij field.
         - Other fields (e.g., serving cell ID, BWP ID) use the same content defined in the existing MAC CE.
   ■ See FIG. 1f-01

FIG. 1j illustrates an operation of a UE according to an embodiment of the disclosure.

In operation 1j-05, the UE may receive UE capability (or UE capability information) and may deliver (or transmit) the same to a base station.

The UE may deliver (or transmit) the UE capability information by including information regarding whether there is a capability of supporting a data transmission and reception enhancement technique through a plurality of TRPs using a unified TCI framework. In particular, the UE may deliver the same by including information related to supporting a single DCI-based multi TRP operation using the unified TCI framework.

The UE may deliver whether the corresponding function is supported for each band, supported for each band combination, or supported for each UE, through signaling. Also, it may include whether the UE has the beam change capability for a cell group that is simultaneously applied by applying the unified TCI framework to a cell group according to the UE capability.

In operation 1j-10, the UE may receive radio resource control (RRC) configuration (e.g., RRCReconfiguration message) from the base station.

The RRCReconfiguration message may include configuration information related to a multi TRP operation to which a unified TCI structure is applied. That is, it may be unified TCI state configuration and configuration related to a single PDCCH-based PDSCH transmission technique.

Additionally, RRC configuration that semi-statically indicates a unified TCI state applied to the UE for each channel may be provided for each channel. Detailed configuration information refers to FIG. 1h-20.

Also, in addition to the configuration, cell group configuration may be provided in association with a simultaneous beam update operation for a plurality of carriers. That is, a cell to which a simultaneous beam change is applied is configured by applying the unified TCI framework to a cell group.

In operation 1j-15, the UE may receive an enhanced unified TCI state activation/deactivation MAC CE from the base station.

The MAC CE may be a MAC CE for supporting a single PDCCH-based multi TRP operation (see FIG. 1i). A type of the received MAC CE may vary depending on which unified TCI state mode is received through RRC configuration.

In operation 1j-20, the UE may determine whether to apply the TCI state for each channel.

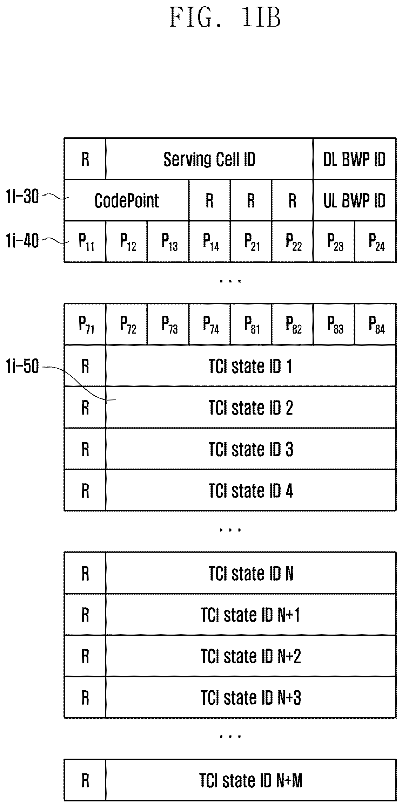

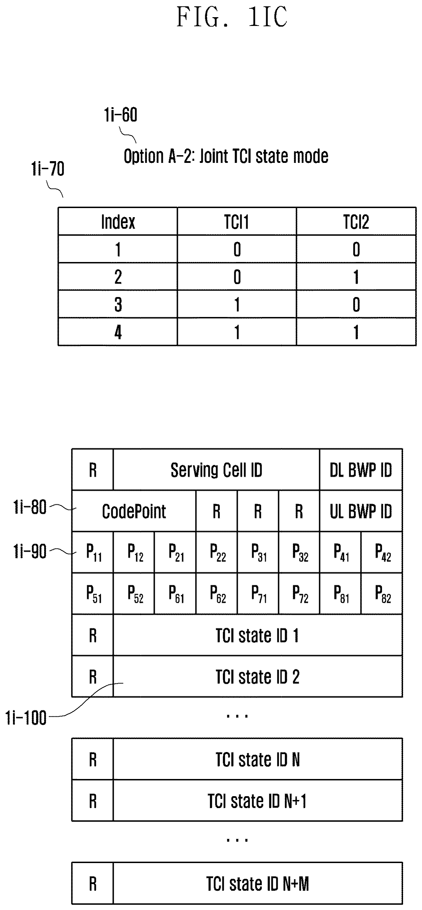

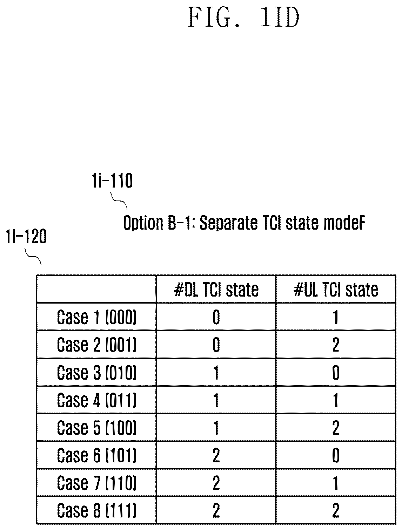

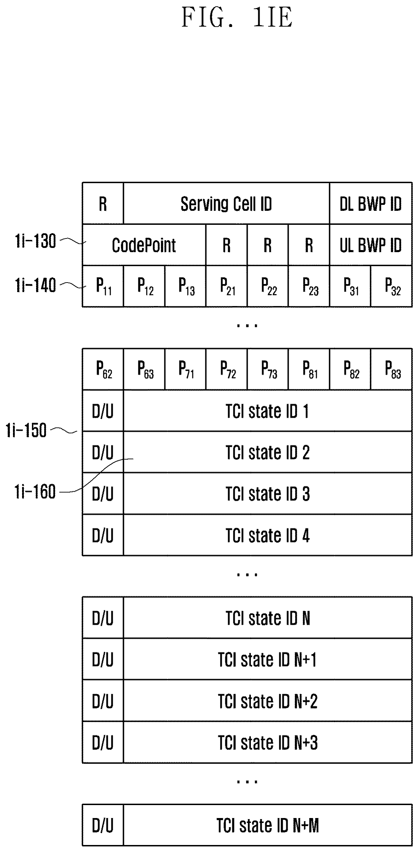

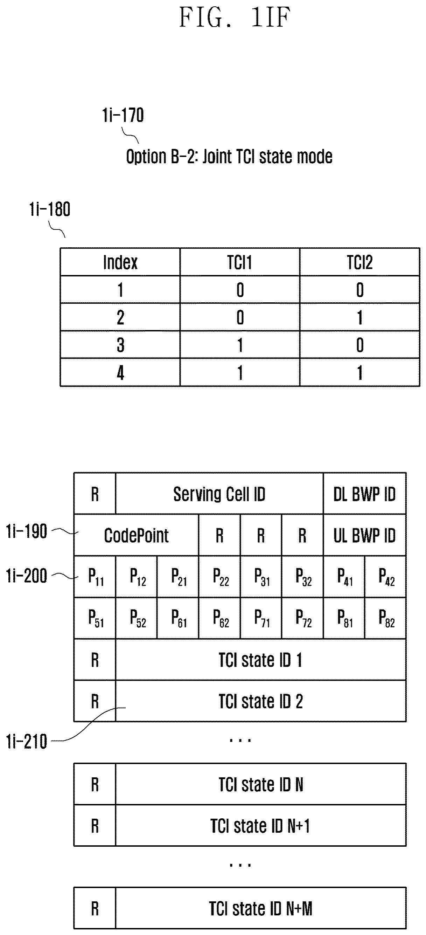

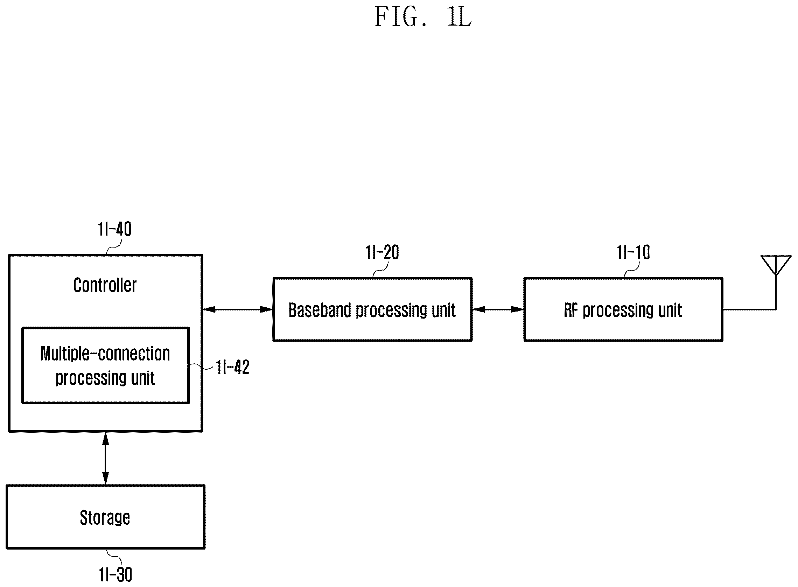

More specifically, the UE may receive the MAC CE for supporting the single PDCCH-based multi TRP operation (see FIG. 1 ia to FIG. 1if), and may determine whether a field for applying a TCI state for each channel is configured in the received RRC configuration (e.g., RRCReconfiguration message).

When the field for applying the TCI state for each channel is configured in the received RRC configuration (e.g., RRCReconfiguration message), the UE may activate the unified TCI state (TCI state indication for a plurality of TRPs) indicated in the received MAC CE in operation 1j-25. That is, one-time MAC CE reception may activate a beam associated with two TRPs. Here, when activating a beam, the unified TCI state application rule described in FIG. 1g may be applied.

In operation 1j-30, the UE may receive DCI and may apply an indicated beam after a BAT.

More specifically, the UE may receive a PDCCH (DCI) from the base station and may receive an indication of a single codepoint to be applied to actual data transmission and reception among the plurality of beams applied in the above operation. The corresponding codepoint may include a unified TCI state used for TRP1 and TRP2, and may include only a TCI state for TRP1 and a TCI state for TRP2.

The UE may apply a beam or beams associated with a codepoint indicated after a beam application time (BAT). Also, a 'TCI selection field' to dynamically determine a beam applied to a PDSCH may be present in the above operation. Refer to FIG. 1g-85 for related operation.

In operation 1j-35, the UE may perform a beam application and operation for each channel according to multi TRP operation configuration.

More specifically, the unified TCI state(s) indicated in the above operation may be applied to data transmission and reception through the plurality of TRPs. That is, data communication may be performed through the indicated beam with respect to channel transmission across uplink and downlink.

In operation 1j-20, the UE may determine whether to apply the TCI state for each channel.

More specifically, the UE may receive a MAC CE (see FIG. 1ia to FIG. 1if) to support the single PDCCH-based multi TRP operation, and may determine whether a field for applying a TCI state for each channel is configured in previously received RRC configuration (e.g., RRCReconfiguration message).

If the field for applying the TCI state for each channel is not configured in the received RRC configuration (e.g., RRCReconfiguration message), the UE may activate the unified TCI state (TCI state indication for a plurality of TRPs) indicated in the received MAC CE according to a basic application rule in operation 1j-40. That is, one-time MAC CE reception may activate a beam associated with two TRPs. Here, a beam's basic application rule may be a method of applying a beam indicated in the MAC CE to the entire channel as is or applying a specific beam (e.g., first indicated beam) defined in the standard.

In operation 1j-45, the UE may receive DCI and may apply the indicated beam after a BAT.

More specifically, the UE may receive a PDCCH (DCI) from the base station and may receive indication of a single codepoint to be applied to actual data transmission and reception among the plurality of beams activated in the above operation. The corresponding codepoint may include a unified TCI state used for TRP1 and TRP2, and may include only a TCI state for TRP1 and a TCI state for TRP2.

The UE may apply a beam or beams associated with the codepoint after the indicated BAT. Also, in the above operation, a 'TCI selection field' that dynamically determines a beam to be applied to the PDSCH may be present. Refer to FIG. 1g-85 for related operation.

In operation 1j-50, the UE may perform a channel-wise beam application and operation according to multi TRP operation configuration.

More specifically, the UE may apply the unified TCI state(s) indicated in the above operation to data transmission and reception through the plurality of TRPs. That is, data communication may be performed through a beam indicated for channel transmission across the entire uplink and downlink.

FIG. 1k illustrates an operation of a base station according to an embodiment of the disclosure.

In operation 1k-05, the base station may establish an RRC connected state with a UE.

In operation 1k-10, the base station may request UE capability from the UE, and may receive corresponding UE capability information from the UE.

The base station may analyze the UE capability received in operation 1k-10, and may determine whether the UE has the capability of supporting a data transmission and reception enhancement technique through a plurality of TRPs (multi TRP) using a unified TCI framework. Also, the base station may identify whether it is possible to configure a data transmission and reception enhancement function through the plurality of TRPs (multi TRP) using the unified TCI framework. The base station may know whether the function is supported for each band or supported for each UE.

Also, the base station may know whether the UE has the capability of simultaneously applying beam change to a cell group by applying the unified TCI framework to the cell group according to the UE capability.

In operation 1k-15, the base station may configure a multi TRP operation to which the unified TCI framework is applied based on the UE capability.

More specifically, the base station may complete the UE capability identification and then, may configure the UE with the multi TRP operation to which the unified TCI structure is applied according to the UE capability through an RRC message. This may be a configuration that supports a single PDCCH-based PDSCH transmission using the unified TCI state framework.

Also, in the above operation, the base station may deliver unified TCI state related configuration (or unified TCI state related configuration information) to the UE.

Also, if the UE does not have the corresponding capability or if the base station determines that the corresponding configuration is not required, the UE may support the data enhancement technique through the plurality of TRPs using the existing TCI state procedure.

Also, a new field (applyIndicatedTCIState) that determines which of unified TCI states indicated for each channel to apply may be added for each channel. This is configuration indicating which TCI state to apply when a plurality of TCI states are indicated by a MAC CE or DCI for each channel in addition to the unified TCI state configuration. Refer to Table 4 in FIG. 1g for detailed configuration.

For reference, a followUnifiedTCI-State-r17 field within ControlResourceSet (CORESET) is a field indicating whether the unified TCI state is applied in the corresponding ControlResourceSet, and when the followUnifiedTCI-State-r17 field is configured (when set to TRUE), the UE may apply a beam indicated as the unified TCI state (beam indicated by MAC CE or DCI) to PDCCH reception and PDSCH reception.

Meanwhile, when the followUnifiedTCI-State-r17 field is not configured, the UE may not use the unified TCI state, a Rel-15/16-based TCI state indication MAC CE may be applied to the PDCCH reception, and a Rel-15/16-based TCI state activation MAC CE and DCI-type beam indication may be applied to the PDSCH reception.

An associated operation between the followUnifiedTCI-State-r17 field configured within ControlResourceSet and a newly introduced applyIndicatedTCIState-r18 field may be performed using two methods described above in FIG. 1h-20. The base station may configure applyIndicatedTCIState for each channel according to the determined method.

In operation 1k-20, the base station may indicate beam activation by delivering (or transmitting) the unified TCI MAC CE for supporting the mTRP operation.

More specifically, the base station may indicate beam update by delivering a MAC CE for beam update for a specific carrier and BWP based on the unified TCI framework configured using the RRC, beam configuration information, and information on a simultaneous beam update operation for a plurality of carriers.

The beam indication MAC CE may be one of the MAC CEs described in FIG. 1i. That is, it is to support the data transmission and reception enhancement technique through single DCI-based multiple TRPs using the unified TCI framework. If the unified TCI state is not configured, the existing TCI state activation MAC CE may be used in the above operation.

In operation 1k-25, the base station may indicate and use beam information used for data communication by indicating beam activation for a BWP of a specific serving cell through DCI.

Then, in operation 1k-30, the base station may instruct the UE to maintain the unified TCI state framework technique, or may indicate function transition by transmitting (or delivering) a MAC CE that desires RRC reconfiguration and function change when the UE desires to change the function transition.

For example, a case of maintaining the unified TCI state framework technique or desiring the function transition may include a change from the applyIndicatedTCIState-based unified TCI operation that operates in Rel-18 to the Rel-17 followUnifiedTCI-State-r17 unified TCI operation support. The MAC CE may include the Rel-17 unified TCI state MAC CE.

The detailed function transitioning method may be determined according to the first unified TCI framework association operation and the second unified TCI framework association operation described above in FIG. 1h.

FIG. 1I is a block diagram illustrating an internal structure of a UE according to an embodiment of the disclosure.

With reference to the drawing, the UE includes a radio frequency (RF) processing unit 11-10, a baseband processing unit 11-20, a storage 11-30, and a controller 11-40.

The RF processing unit 11-10 performs a function for transmitting and receiving signals through a wireless channel, such as band conversion and amplification of a signal. That is, the RF processing unit 11-10 up-converts a baseband signal provided from the baseband processing unit 11-20 to an RF band signal and then transmits the same through an antenna, and down-converts an RF band signal received through the antenna to a baseband signal. For example, the RF processing unit 11-10 may include a Tx filter, an Rx filter, an amplifier, a mixer, an oscillator, a digital-to-analog convertor (DAC), and an analog-to-digital convertor (ADC). Although only a single antenna is illustrated in the drawing, the UE may include a plurality of antennas. Also, the RF processing unit 11-10 may include multiple RF chains. Further, the RF processing unit 11-10 may perform beamforming. For the beamforming, the RF processing unit 11-10 may adjust the phase and magnitude of each of signals transmitted and received through multiple antennas or antenna elements. Also, the RF processing unit may perform multiple input multiple output (MIMO), and may receive a plurality of layers when performing a MIMO operation.

The baseband processing unit 11-20 performs a conversion function between a baseband signal and a bitstream according to a physical layer standard of the system. For example, when transmitting data, the baseband processing unit 11-20 generates complex symbols by encoding and modulating a transmission bitstream. Also, when receiving data, the baseband processing unit 11-20 restores a received bitstream by demodulating and encoding the baseband signal provided from the RF processing unit 11-10. For example, in the case of following an orthogonal frequency division multiplexing (OFDM) method, when transmitting data, the baseband processing unit 11-20 generates complex symbols by encoding and modulating the transmission bitstream, maps the complex symbols to subcarriers, and then constructs OFDM symbols through inverse fast Fourier transform (IFFT) operation and cyclic prefix (CP) insertion. Also, when receiving data, the baseband processing unit 11-20 divides the baseband signal provided from the RF processing unit 11-10 into OFDM symbol units, restores signals mapped to subcarriers through fast Fourier transform (FFT) operation, and then restores the received bitstream through demodulation and decoding.

The baseband processing unit 11-20 and the RF processing unit 11-10 transmit and receive signals as described above. Accordingly, the baseband processing unit 11-20 and the RF processing unit 11-10 may be referred to as a transmitter, a receiver, a transceiver, or a communication unit. Further, at least one of the baseband processing unit 11-20 and the RF processing unit 11-10 may include multiple communication modules to support different multiple wireless access technologies. Also, at least one of the baseband processing unit 11-20 and the RF processing unit 11-10 may include different communication modules to process signals of different frequency bands. For example, the different wireless access technologies may include a wireless local area network (LAN) (e.g., IEEE 802.11) and a cellular network (e.g., LTE). Also, the different frequency bands may include a super high frequency (SHF) (e.g., 2.NRHz, NRhz) band and a millimeter wave (mm) (e.g., 60GHz) band.

The storage 11-30 stores data, such as a basic program, an application program, and configuration information, for the operation of the UE. In particular, the storage 11-30 may store information related to a second access node that performs wireless communication using second wireless access technology. And, the storage 11-30 provides stored data upon request from the controller 11-40.

The controller 11-40 controls the overall operation of the UE. For example, the controller 11-40 transmits and receives signals through the baseband processing unit 11-20 and the RF processing unit 11-10. Also, the controller 11-40 writes and reads data to and from the storage 11-40. To this end, the controller 11-40 may include at least one processor. For example, the controller 11-40 may include a communication processor (CP) for performing control for communication and an application processor (AP) for controlling a higher layer, such as an application program.

FIG. 1m is a block diagram illustrating the constitution of an NR base station according to an embodiment of the disclosure.

As illustrated in the drawing, the base station includes an RF processing unit 1m-10, a baseband processing unit 1m-20, a backhaul communication unit 1m-30, a storage 1m-40, and a controller 1m-50.

The RF processing unit 1m-10 performs a function for transmitting and receiving signals through a wireless channel, such as band conversion and amplification of a signal. That is, the RF processing unit 1m-10 up-converts a baseband signal provided from the baseband processing unit 1m-20 to an RF band signal and then transmits the same through an antenna, and down-converts an RF band signal received through the antenna to a baseband signal. For example, the RF processing unit 1m-10 may include a Tx filter, an Rx filter, an amplifier, a mixer, an oscillator, a DAC, and an ADC. Although only a single antenna is illustrated in the drawing, the first access node may include multiple antennas. Also, the RF processing unit 1m-10 may include multiple RF chains. Further, the RF processing unit 1m-10 may perform beamforming. For the beamforming, the RF processing unit 1m-10 may adjust the phase and magnitude of each of signals transmitted and received through multiple antennas or antenna elements. The RF processing unit may perform a downlink MIMO operation by transmitting one or more layers.

The baseband processing unit 1m-20 performs a conversion function between a baseband signal and a bitstream according to a physical layer standard of first wireless access technology. For example, when transmitting data, the baseband processing unit 1m-20 generates complex symbols by encoding and modulating a transmission bitstream. Also, when receiving data, the baseband processing unit 1m-20 restores a received bitstream by demodulating and encoding the baseband signal provided from the RF processing unit 1m-10. For example, in the case of following an OFDM method, when transmitting data, the baseband processing unit 1m-20 generates complex symbols by encoding and modulating the transmission bitstream, maps the complex symbols to subcarriers, and then constructs OFDM symbols through IFFT operation and CP insertion. Also, when receiving data, the baseband processing unit 1m-20 divides the baseband signal provided from the RF processing unit 1m-10 into OFDM symbol units, restores signals mapped to subcarriers through FFT operation, and then restores the received bitstream through demodulation and decoding. The baseband processing unit 1m-20 and the RF processing unit 1m-10 transmit and receive signals as described above. Accordingly, the baseband processing unit 1m-20 and the RF processing unit 1m-10 may be referred to as a transmitter, a receiver, a transceiver, or a communication unit.

The backhaul communication unit 1m-30 provides an interface for communicating with other nodes within a network. That is, the backhaul communication unit 1m-30 converts a bitstream transmitted from the main base station to another node, for example, an auxiliary base station and a core network, to a physical signal, and converts a physical signal received from the other node to a bitstream.

The storage 1m-40 stores data, such as a basic program, an application program, and configuration information, for the operation of the main base station. In particular, the storage 1m-40 may store information on a bearer assigned to the connected UE and the measurement results reported from the connected UE. Also, the storage 1m-40 may store information that serves as a basis for determining whether to provide multiconnection to the UE or whether to suspend the same. And, the storage 1m-40 provides stored data upon request from the controller 1m-50.

The controller 1m-50 controls the overall operation of the main base station. For example, the controller 1m-50 transmits and receives signals through the baseband processing unit 1m-20 and the RF processing unit 1m-10 or through the backhaul communication unit 1m-30. Also, the controller 1m-50 writes and reads data to and from the storage 1m-40. To this end, the controller 1m-50 may include at least one processor.

It should be noted that constitution diagrams, example diagrams of control/data signal transmission and reception methods, and operation procedure example diagrams illustrated in FIG. 1a to FIG. 1m are not intended to limit the scope of embodiments of the disclosure. That is, all components, entities, or operations illustrated in FIG. 1a to FIG. 1m should not be interpreted as essential components for implementation of the disclosure, and the disclosure may be implemented to the extent that the essence of the disclosure is not compromised even if only some components are included.

The operations of the embodiments described above may be realized by providing a memory device storing a program code in an arbitrary component within the device. That is, a controller within the device may execute the above-described operations by reading and executing a program code stored in the memory device by way of a processor or a central processing unit (CPU).

Various components and modules of the entity or the terminal device described herein may operate using a hardware circuit, for example, a complementary metal oxide semiconductor (CMOS)-based logic circuit, firmware, software, and/or combination of hardware and firmware and/or software embedded in a machine-readable medium. For example, various electrical structures and methods may be implemented using electrical circuits, such as transistors, logic gates, and application specific semiconductors.

The methods according to the embodiments described in the claims or specification of the disclosure may be implemented in the form of hardware, software, or combination of hardware and software.

When implemented in software, a computer-readable storage medium storing one or more programs (software modules) may be provided. The one or more programs stored in the computer-readable storage medium may be configured for execution by one or more processors within an electronic device. The one or more programs may include instructions that cause the electronic device to execute the methods according to the embodiments described in the claims or specification of the disclosure.

Such a program (software module, software) may be stored in a random access memory, a nonvolatile memory including a flash memory, a read only memory (ROM), an electrically erasable programmable read only memory (EEPROM), a magnetic disc storage device, a compact disc-ROM (CD-ROM), digital versatile discs (DVDs), other types of optical storage devices, or a magnetic cassette. Alternatively, such a program may be stored in a memory configured with the combination of some or all of them. Also, a plurality of component memories may be included.

Also, the program may be stored in an attachable storage device that may be accessed through a communication network, such as the Internet, an intranet, a local area network (LAN), a wide area network (WAN), or a storage area network (SAN), or through a communication network configured with the combination thereof. Such a storage device may access a device that carries out an embodiment of the disclosure through an external port. Also, a separate storage device on a communication network may access the device that carries out an embodiment of the disclosure.

In detailed embodiments of the disclosure described above, a component included in the disclosure is expressed in a singular or plural form depending on the presented detailed embodiments. However, the singular or plural expression is selected to be suitable for a presented situation for convenience of description. The disclosure is not limited to a singular component or a plurality of components. Even a component expressed in the plural form may be configured to be singular, or a component expressed in the singular form may be configured to be plural.

Meanwhile, although specific embodiments have been described in the detailed description of the disclosure, various modifications may be made without departing from the scope of the disclosure. Therefore, the scope of the disclosure should not be limited to the described embodiments and should be defined by the claims and equivalents thereof.

## Claims

1. A method performed by a user equipment (UE) in a wireless communication system, the method comprising:
receiving, from a base station, a radio resource control (RRC) message that includes information related to at least one transmission configuration indictor (TCI) state;
receiving, from the base station, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information;
receiving, from the base station, downlink control information (DCI) that includes a TCI field indicating the single code point; and
identifying TCI state information related to a code point corresponding to the TCI field based on the RRC message and the MAC CE.

2. The method of claim 1, wherein the RRC message further includes information regarding which TCI state information between the first TCI state information and the second TCI state information to be applied for each of at least one channel.

3. The method of claim 1, wherein, when the TCI state is set to a joint mode,
the first information corresponding to the first TCI state includes third information corresponding to any one link between downlink (DL) and uplink (UL),
the second information corresponding to the second TCI state includes fourth information corresponding to any one link between the downlink and the uplink, and
the number of TCI state identifier (ID) information according to the first information and the second information is set to a maximum of 16.

4. The method of claim 1, wherein, when the TCI state is set to a separate mode,
the first information corresponding to the first TCI state includes fifth information corresponding to downlink (DL) and sixth information corresponding to uplink (UL),
the second information corresponding to the second TCI state includes seventh information corresponding to the downlink and eighth information corresponding to the uplink, and
the number of TCI state identifier (ID) information according to the first information and the second information is set to a maximum of 32.

5. A method performed by a base station in a wireless communication system, the method comprising:
transmitting, to a user equipment (UE), a radio resource control (RRC) message that includes information related to at least one transmission configuration indictor (TCI) state;
transmitting, to the UE, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information; and
transmitting, to the UE, downlink control information (DCI) that includes a TCI field indicating the single code point,
wherein state information related to a code point corresponding to the TCI field included in the DCI is related to the RRC message and the MAC CE.

6. The method of claim 5, wherein the RRC message further includes information regarding which TCI state information between the first TCI state information and the second TCI state information to be applied for each of at least one channel.

7. The method of claim 5, wherein, when the TCI state is set to a joint mode,
the first information corresponding to the first TCI state includes third information corresponding to any one link between downlink (DL) and uplink (UL),
the second information corresponding to the second TCI state includes fourth information corresponding to any one link between the downlink and the uplink, and
the number of TCI state identifier (ID) information according to the first information and the second information is set to a maximum of 16.

8. The method of claim 5, wherein, when the TCI state is set to a separate mode,
the first information corresponding to the first TCI state includes fifth information corresponding to downlink (DL) and sixth information corresponding to uplink (UL),
the second information corresponding to the second TCI state includes seventh information corresponding to the downlink and eighth information corresponding to the uplink, and
the number of TCI state identifier (ID) information according to the first information and the second information is set to a maximum of 32.

9. A user equipment (UE) in a wireless communication system, the UE comprising:
a transceiver configured to transmit and receive signals; and
a controller combined with the transceiver,
wherein the controller is configured to,
receive, from a base station, a radio resource control (RRC) message that includes information related to at least one transmission configuration indictor (TCI) state,
receive, from the base station, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information,
receive, from the base station, downlink control information (DCI) that includes a TCI field indicating the single code point, and
identify TCI state information related to a code point corresponding to the TCI field based on the RRC message and the MAC CE.

10. The UE of claim 9, wherein the RRC message further includes information regarding which TCI state information between the first TCI state information and the second TCI state information to be applied for each of at least one channel.

11. The UE of claim 9, wherein, when the TCI state is set to a joint mode,
the first information corresponding to the first TCI state includes third information corresponding to any one link between downlink (DL) and uplink (UL),
the second information corresponding to the second TCI state includes fourth information corresponding to any one link between the downlink and the uplink, and
the number of TCI state identifier (ID) information according to the first information and the second information is set to a maximum of 16.

12. The UE of claim 9, wherein, when the TCI state is set to a separate mode,
the first information corresponding to the first TCI state includes fifth information corresponding to downlink (DL) and sixth information corresponding to uplink (UL),
the second information corresponding to the second TCI state includes seventh information corresponding to the downlink and eighth information corresponding to the uplink, and
the number of TCI state identifier (ID) information according to the first information and the second information is set to a maximum of 32.

13. A base station in a wireless communication system, the base station comprising:
a transceiver configured to transmit and receive signals; and
a controller combined with the transceiver,
wherein the controller is configured to,
transmit, to a user equipment (UE), a radio resource control (RRC) message that includes information related to at least one transmission configuration indictor (TCI) state,
transmit, to the UE, a media access control (MAC) control element (CE) for activating at least one TCI state, the MAC CE including first information corresponding to a first TCI state related to at least one single code point, second information corresponding to a second TCI state related to the single code point, and TCI state identifier (ID) information according to the first information and the second information, and
transmit, to the UE, downlink control information (DCI) that includes a TCI field indicating the single code point, and
state information related to a code point corresponding to the TCI field included in the DCI is related to the RRC message and the MAC CE.

14. The base station of claim 13, wherein the RRC message further includes information regarding which TCI state information between the first TCI state information and the second TCI state information to be applied for each of at least one channel.

15. The base station of claim 13, wherein, when the TCI state is set to a joint mode,
the first information corresponding to the first TCI state includes third information corresponding to any one link between downlink (DL) and uplink (UL),
the second information corresponding to the second TCI state includes fourth information corresponding to any one link between the downlink and the uplink, and
the number of TCI state identifier (ID) information according to the first information and the second information is set to a maximum of 16, and
when the TCI state is set to a separate mode,
the first information corresponding to the first TCI state includes fifth information corresponding to downlink (DL) and sixth information corresponding to uplink (UL),
the second information corresponding to the second TCI state includes seventh information corresponding to the downlink and eighth information corresponding to the uplink, and
the number of TCI state identifier (ID) information according to the first information and the second information is set to a maximum of 32.
